# EUROPEAN PATENT APPLICATION

(11) **EP 4 815 432 A1**
(43) Date of publication of application: **30.09.2026**
(21) Application number: 24915538.3
(22) Date of filing: 28.11.2024
(51) Int. Cl.: H04N 7/01, G06F 3/04845, G06F 3/0488

(54) **METHOD FOR PROVIDING VIDEO, AND ELECTRONIC DEVICE FOR SUPPORTING SAME**

(30) Priority: 03.01.2024 KR 20240001193; 10.06.2024 KR 20240075083
(71) Applicant: Samsung Electronics Co., Ltd., Suwon-si, Gyeonggi-do 16677 (KR)
(72) Inventor: GO, Ara, Suwon-si Gyeonggi-do 16677 (KR); BAE, Sujung, Suwon-si Gyeonggi-do 16677 (KR); OH, Yanggeun, Suwon-si Gyeonggi-do 16677 (KR)
(74) Representative: Nederlandsch Octrooibureau
(86) International application number: PCT/KR2024/019165
(87) International publication number: WO 2025/146955

(57) **Abstract**

An electronic device according to one embodiment may comprise: a touch display; at least one processor including a processing circuit; and a memory for storing instructions. When executed individually or collectively by the at least one processor, the instructions enable: the electronic device to play back a video in a normal mode on a user interface through the touch display on the basis of a first user input for playing back the video, which is stored in the memory; and a second user input for playback in a slow motion mode to be acquired while the video is played back in the normal mode through the touch display. The second user input can correspond to a touch input on the touch display. When executed individually or collectively by the at least one processor, the instructions enable: interpolated frames to be generated by performing a frame rate conversion operation on corresponding frames included in the video, while the second user input is held on the touch display; the electronic device to play back the video in the slow motion mode by displaying the corresponding frames together with the generated interpolated frames through the touch display, while the second user input is held on the touch display; and the electronic device to resume, on the basis of the second user input being released from the touch display, the operation of playing back the video in the normal mode through the touch display.

## Description

### [Technical Field]

The disclosure relates to a method for providing a video and an electronic device supporting the same.

### [Background Art]

An electronic device may provide a slow motion video in, e.g., two ways.

A first way of providing a slow motion video may be a way of playing back a video generated (e.g., recorded) at a standard speed (e.g., 1.0x rate) at a playback speed slower than the standard speed (e.g., 2x or 4x).

A second way of providing a slow motion video may be a way of playing back a video generated at a higher frame rate at a lower frame rate. For example, an electronic device may generate frames at a frame rate of 240 frames per second (FPS) using a camera. The electronic device may generate interpolation frames (interpolated frames) by performing a frame rate conversion (FRC) operation (also referred to as "FRC processing" or "frame rate up conversion") for the frames generated at the frame rate of 240 FPS. The electronic device may obtain a video having a frame rate of 960 FPS (hereinafter, referred to as a "super slow motion video") by combining the frames generated at 240 FPS and the generated interpolation frames. The electronic device may play back the obtained video at a frame rate lower than the frame rate of 960 FPS.

The above-described information may be provided as a related art for helping understanding of the disclosure. No claim or determination is made as to whether any of the foregoing is applicable as background art in relation to the disclosure.

### [Detailed Description of the Invention]

### [Technical Solution]

The first way of providing a slow motion video may have a problem that frames of a video appear choppy to a user because only a playback speed of the video is adjusted to a slower speed.

The second way of providing a slow motion video requires a component having a high specification (e.g., a high-specification camera) and a storage space (e.g., a storage space of memory) to generate a super slow motion video, and may require more processing time. Accordingly, the second way may have a limitation on a time for generating a super slow motion video (e.g., a length of time for recording a super slow motion video). Further, the second way may make it difficult to play back a super slow motion video corresponding to a time interval desired by a user because a super slow motion video is played back during an entire time interval in which a video is played back.

The disclosure relates to a method of providing a video capable of providing a slow motion video by performing an FRC operation based on a user input while the video is played back, and an electronic device supporting the same.

Technical problems to be solved by the disclosure are not limited to the technical problems mentioned above, and other technical problems not mentioned are clearly understood by those having ordinary skill in the technical field related to this document from the following description.

An electronic device according to an embodiment may include a touch display, at least one processor including processing circuitry, and memory storing instructions. The instructions may, when executed by the at least one processor individually or collectively, cause the electronic device to play back the video in a normal mode on a user interface through the touch display, based on a first user input for playing back a video stored in the memory. The instructions may, when executed by the at least one processor individually or collectively, cause the electronic device to obtain a second user input for playing back in a slow motion mode, while playing back the video in the normal mode through the touch display. The second user input may correspond to a touch input on the touch display. The instructions may, when executed by the at least one processor individually or collectively, cause the electronic device to generate interpolation frames by performing the frame rate conversion operation for corresponding frames included in the video, while the second user input is maintained on the touch display. The instructions may, when executed by the at least one processor individually or collectively, cause the electronic device to play back the video in the slow motion mode by displaying the corresponding frames together with the generated interpolation frames through the touch display, while the second user input is maintained on the touch display. The instructions may, when executed by the at least one processor individually or collectively, cause the electronic device to resume playing back the video in the normal mode through the touch display, based on the second user input being released from the touch display.

A method according to an embodiment may include playing back the video in a normal mode on a user interface through a touch display of an electronic device, based on a first user input for playing back a video stored in memory of the electronic device. The method may include obtaining a second user input for playing back in a slow motion mode, while playing back the video in the normal mode through the touch display of the electronic device. The second user input may correspond to a touch input on the touch display. The method may include generating interpolation frames by performing a frame rate conversion operation for corresponding frames included in the video, while the second user input is maintained on the touch display. The method may include playing back the video in the slow motion mode by displaying the corresponding frames together with the generated interpolation frames through the touch display, while the second user input is maintained on the touch display. The method may include resuming the playback of the video in the normal mode through the touch display, based on the second user input being released from the touch display.

In an embodiment, in a non-transitory computer-readable storage medium storing computer-executable instructions, the computer-executable instructions may, when executed by at least one processor individually or collectively, cause an electronic device to play back a video in a normal mode through a touch display of the electronic device, based on a first user input for playing back the video stored in memory of the electronic device. The computer-executable instructions may, when executed by at least one processor individually or collectively, cause an electronic device to obtain a second user input for playing back in a slow motion mode, while playing back the video in the normal mode through the touch display. The second user input may correspond to a touch input on the touch display. The computer-executable instructions may, when executed by at least one processor individually or collectively, cause an electronic device to generate interpolation frames by performing a frame conversion operation for corresponding frames included in the video, while the second user input is maintained on the touch display. The computer-executable instructions may, when executed by at least one processor individually or collectively, cause an electronic device to play back the video in the slow motion mode by displaying the corresponding frames together with the generated interpolation frames through the touch display, while the second user input is maintained on the touch display. The computer-executable instructions may, when executed by at least one processor individually or collectively, cause an electronic device to resume playing back the video in the normal mode through the touch display, based on the second user input being released from the touch display.

A method of providing a video and an electronic device supporting the same according to the disclosure may provide a slow motion video by performing an FRC operation based on a user input while a video is played back. Accordingly, the electronic device may enable a portion that a user discovers impressive and wants to watch slowly within a video to be played back smoothly and slowly.

### [Brief Description of Drawings]

FIG. 1 is a block diagram illustrating an electronic device in a network environment according to an embodiment.
FIG. 2 is a block diagram illustrating an electronic device, according to an embodiment.
FIG. 3 is a flowchart illustrating a method of providing a video according to an embodiment.
FIG. 4 is a view illustrating a method of providing a video according to an embodiment.
FIG. 5 is a view illustrating a method of providing a video according to an embodiment.
FIG. 6 is a flowchart illustrating a method of providing a video based on a position where a user input is obtained according to an embodiment.
FIG. 7 is a view illustrating a method of providing a video based on a position where a user input is obtained according to an embodiment.
FIG. 8 is a flowchart illustrating a method of providing a video based on an intensity of a pressure which occurs by a touch according to an embodiment.
FIG. 9 is a view illustrating a method of providing a video based on an intensity of a pressure which occurs by a touch according to an embodiment.
FIG. 10 is a flowchart illustrating a method of providing a video based on a drag according to an embodiment.
FIG. 11 is a view illustrating a method of providing a video based on a drag according to an embodiment.
FIG. 12 is a flowchart illustrating a method of storing a video of a time interval where a temporal zoom is performed according to an embodiment.
FIG. 13 is a view illustrating a method of storing a video of a time interval where a temporal zoom is performed according to an embodiment.
FIG. 14 is a view illustrating a method of storing a video of a time interval where a temporal zoom is performed according to an embodiment.
FIG. 15 is a flowchart illustrating a method of sharing a video of a time interval where a temporal zoom is performed according to an embodiment.
FIG. 16 is a view illustrating a method of sharing a video of a time interval where a temporal zoom is performed according to an embodiment.
FIG. 17 is a flowchart illustrating a method of storing a video in which an original video and interpolation frames of a time interval where a temporal zoom is performed are combined according to an embodiment.
FIG. 18 is a view illustrating a method of storing a video in which an original video and interpolation frames of a time interval where a temporal zoom is performed are combined according to an embodiment.
FIG. 19 is a view illustrating a method of storing a video in which an original video and interpolation frames of a time interval where a temporal zoom is performed are combined according to an embodiment.
FIG. 20 is a view illustrating a method of providing a video according to an embodiment.
FIG. 21 is a view illustrating a method of providing a video according to an embodiment.
FIG. 22 is a view illustrating a method of providing a video according to an embodiment.
FIG. 23 is a view illustrating a method of providing a video according to an embodiment.
FIG. 24 is a view illustrating a method of providing a video according to an embodiment.
FIG. 25 is a view illustrating a method of providing a video according to an embodiment.
FIG. 26 is a flowchart illustrating a method of providing a video according to an embodiment.
FIG. 27 is a view illustrating a method of providing a video according to an embodiment.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

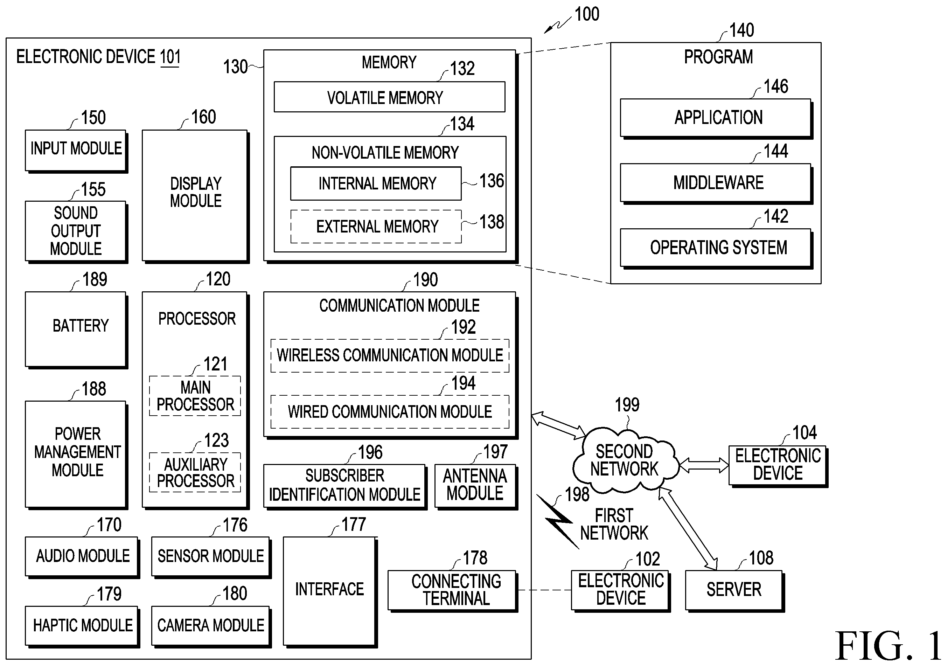

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. In connection to the description of the drawings, similar reference numerals may be used for similar or related components. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

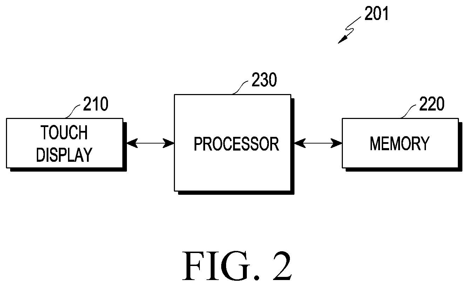

FIG. 2 is a block diagram illustrating an electronic device 201 according to an embodiment.

Referring to FIG. 2, in an embodiment, an electronic device 201 may be the electronic device 101 of FIG. 1.

In an embodiment, an electronic device 201 may include a touch display 210, memory 220, and/or a processor 230.

In an embodiment, the touch display 210 may be included in the display module 160 of FIG. 1. For example, the touch display 210 may be a display (also referred to as a "touch screen") including a touch sensor configured to sense a touch.

In an embodiment, the touch display 210 may play back (e.g., display) a video stored in the memory 220. For example, the touch display 210 may play back a video stored in the memory 220 while a gallery application or a video application is executed under the control of the processor 230.

In an embodiment, the memory 220 may be included in the memory 130 of FIG. 1.

In an embodiment, the memory 220 may store information for performing an operation of providing a video. The information that the memory 220 stores for performing an operation of providing a video is described below in detail.

In an embodiment, the processor 230 may be included in the processor 120 of FIG. 1. The processor 230 may include processing circuitry.

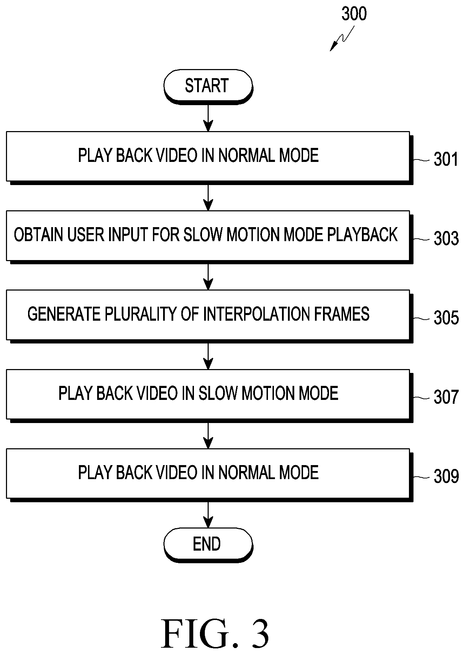

In an embodiment, the processor 230 may control an overall operation of providing a video. The processor 230 may include one or more processors for performing an operation of providing a video. The operation of providing a video performed by the processor 230 is described in detail with reference to FIGS. 3 to 22.

In an embodiment, the processor 230 may include a neural processing unit (NPU) for performing a frame rate conversion (FRC) operation. For example, when an FRC operation is performed using an artificial intelligence model, the processor 230 may include an NPU capable of performing an FRC operation (e.g., an operation of calculating a motion vector (e.g., a magnitude and/or direction of the motion vector) between frames) using the artificial intelligence model.

In an embodiment, the processor 230 may include a graphic processing unit (GPU) generating interpolation frames based on the calculated motion vector, when the motion vector between the frames is calculated.

In an embodiment, the processor 230 may include an application processor (AP) controlling an overall operation for providing a video, except for an operation of calculating the motion vector (e.g., the magnitude and/or direction of the motion vector) between frames performed by the NPU and an operation of generating interpolation frames based on the calculated motion vector performed by the GPU. However, the disclosure is not limited thereto, and the AP may perform an operation of calculating a motion vector between frames using an artificial intelligence model and/or an operation of generating interpolation frames based on the calculated motion vector.

In an embodiment, the operation of providing a video may be performed based on a user interface. For example, the processor 230 may perform an operation of providing a video based on a touch input for a region in which a video is played back on a user interface through the touch display 210 and/or one or more objects (e.g., icons, images) included in the user interface.

Although FIG. 2 illustrates that the electronic device 201 includes the touch display 210, the memory 220, and/or the processor 230, this is not limiting. In an embodiment, the electronic device 201 may further include at least one of the components included in the electronic device 101 of FIG. 1. For example, the electronic device 201 may further include at least one of an input module 150 (e.g., a stylus pen), a sound output module 155 (e.g., a speaker), a camera module 180, or a communication module 190.

FIG. 3 is a flowchart 300 illustrating a method of providing a video according to an embodiment.

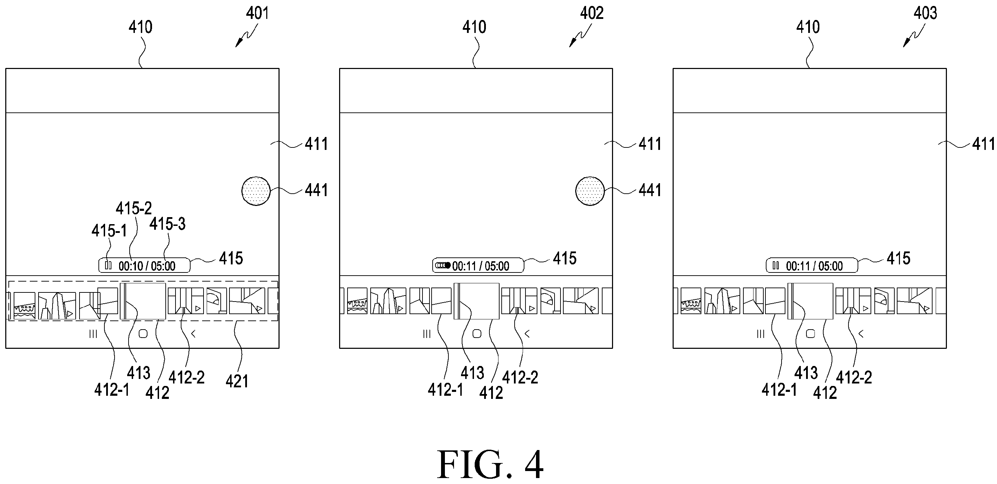

FIG. 4 is a view illustrating a method of providing a video according to an embodiment.

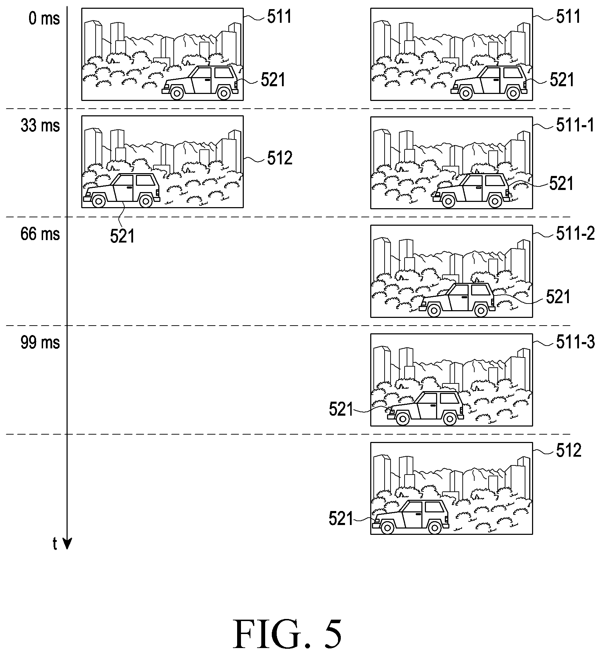

FIG. 5 is a view illustrating a method of providing a video according to an embodiment.

Referring to FIGS. 3 to 5, in operation 301, in an embodiment, the processor 230 may play back (e.g., display) a video in a normal mode on a user interface through the touch display 210, based on a user input (hereinafter, also referred to as a "first user input") for playing back a video stored in the memory 220.

In an embodiment, the processor 230 may display one or more videos stored in the memory 220 through the touch display 210, based on an application (e.g., a gallery application, a video application) capable of executing a video being executed. The processor 230 may play back (e.g., display) a video selected by a user input among the one or more videos through the touch display 210.

In an embodiment, a normal mode (hereinafter, referred to as "normal mode" or "first mode") may include a mode of playing back a video at the same FPS (frame per second) as the FPS used when generating the video. For example, the normal mode may be a mode of playing back a video generated at 30 FPS at 30 FPS. However, the disclosure is not limited thereto. For example, the normal mode may be a mode of continuously playing back only frames of a video without performing an FRC operation for frames of the video while the video is played back through the touch display 210.

In an embodiment, a video played back based on a user input (hereinafter, also referred to as an "original video") may include a plurality of frames (e.g., a plurality of images) (hereinafter, all frames included in the original video are also referred to as "a plurality of first frames") set to be played back sequentially (or continuously).

In an embodiment, an original video played back based on a user input may be a video including or not including interpolation frames (also referred to as "intermediate frames") generated by an FRC operation performed based on a user input during video playback described below.

In an embodiment, each of the plurality of first frames included in the original video may correspond to (e.g., be mapped to) a plurality of times. For example, when the original video is a video generated at a frame rate of 30 FPS, a plurality of times corresponding to each of the plurality of first frames and set at intervals of 1/30 (second) may be stored in the memory 220.

In operation 303, in an embodiment, the processor 230 may obtain a user input (hereinafter, also referred to as a "second user input") for slow motion mode playback while a video is played back through the touch display 210.

In an embodiment, a slow motion mode (hereinafter, referred to as "slow motion mode" or "first mode") may include a mode of generating a video having an FPS higher than that of the original video by performing an FRC operation for the original video, and playing back the generated video at the FPS of the original video. However, the disclosure is not limited thereto. In an embodiment, in the slow motion mode, an effect as if the original video is played back slowly may be provided to a user by playing back the generated video (a video having an FPS higher than that of the original video by performing an FRC operation for the original video) at the FPS of the original video.

In an embodiment, the second user input may include an input for performing an FRC operation.

In an embodiment, the second user input may be an input made by maintaining a touch on a screen displayed through the touch display 210 and the touch on the screen while a video is played back. For example, the second user input may include a long press input on the screen. However, the disclosure is not limited thereto. For example, the second user input may include a touch on the screen and a drag input moving the touch. For example, the second user input may include a user input for starting an FRC operation and a user input for ending an FRC operation. More various examples of the second user input is described below.

In operation 305, in an embodiment, the processor 230 may generate a plurality of interpolation frames by performing an FRC (e.g., frame rate up conversion) operation for a plurality of second frames among the plurality of first frames included in the video, while the second user input is maintained on the touch display 210.

In an embodiment, the FRC (frame rate conversion or frame rate up conversion) operation may be an operation of generating frames having a frame rate higher than that of frames subject to the FRC operation. For example, an FRC operation for a video may include an operation of converting the video into a video having a frame rate higher than that of the video. For example, an FRC operation for a video may include an operation of generating interpolation frames to be interpolated between frames included in the video, and obtaining a video having a frame rate higher than that of the video by combining the frames included in the video and the generated interpolation frames.

In an embodiment, the processor 230 may perform an FRC operation for frames from a frame (hereinafter, also referred to as an "initial frame" or "current frame") being played back through the touch display 210 at the time of the second user input among the plurality of first frames, to a frame (hereinafter, also referred to as a "last frame") being played back through the touch display 210 at the end of the second user input among the plurality of first frames. Hereinafter, frames from the initial frame to the last frame, as frames subject to an FRC operation while the second user input is maintained among the plurality of first frames, are referred to as "a plurality of second frames" or "corresponding frames included in the video".

In an embodiment, the initial frame may be a frame corresponding to a time of a video being played back (e.g., a playback time of the video at the time of initially obtaining the second user input) at the time of obtaining the second user input among the plurality of first frames.

In an embodiment, the last frame may be a frame corresponding to a time of a video being played back (e.g., a playback time of the video at the end of obtaining the second user input) at the end of the second user input among the plurality of first frames.

In an embodiment, when the second user input is a long press input on the touch display 210, the plurality of second frames may be frames displayed on the touch display 210 during a time interval from a time when a long press input is obtained to a time when the long press input is released, within the video.

In an embodiment, the processor 230 may generate a plurality of interpolation frames (hereinafter, referred to as "plurality of interpolation frames") by performing an FRC operation for the plurality of second frames while the second user input is maintained (e.g., during at least a portion of a time during which the second user input is input).

In operation 307, in an embodiment, the processor 230 may play back the video in the slow motion mode by displaying the plurality of second frames and the plurality of interpolation frames through the touch display 210, while the second user input is maintained.

In operation 309, in an embodiment, the processor 230 may resume playing back the video in the normal mode through the touch display 210, based on the second user input being released.

Hereinafter, operations 301 to 309 are described in more detail with reference to FIGS. 4 and 5.

In an embodiment, at reference numeral 401 of FIG. 4, the processor 230 may display a video and an object 415 for controlling playback of the video through a first region 411 of a screen 410 of the touch display 210, and display thumbnail images 412, 412-1, 412-2 of videos stored in the memory 220 through a second region 421 of the screen 410, based on a first user input for playing back a video while a gallery application is executed.

In an embodiment, at reference numeral 401, the object 415 may include an indication 415-1 indicating that a video is paused or being played back, a current playback time 415-2 of the video, and a total playback time 415-3 of the video. The processor 230 may pause a video being played back or play back a paused video again through the touch display 210, based on a user input for the object 415.

In an embodiment, at reference numeral 401, a thumbnail image 412 (also referred to as a "film strip") displayed in the second region 421 may be a thumbnail image indicating a video being played back (or paused) through the first region 411. An indication 413 (also referred to as a "seek bar") displayed in the thumbnail image 412 may be an object for indicating a frame corresponding to a current playback time (or a current playback time) for a video being played back through the first region 411. The thumbnail images 412-1, 412-2 displayed in the second region 421 may be thumbnail images of videos before or after the video being played back through the first region 411.

In an embodiment, at reference numerals 401 and 402, the processor 230 may obtain a second user input by a long press 441 of touching the screen 410 and maintaining the touch for a preset time while displaying the screen 410 in which a video is played back through the first region 411. The processor 230 may play back the plurality of second frames and the plurality of interpolation frames through the touch display 210, while the second user input is maintained.

In an embodiment, at reference numeral 403, the processor 230 may play back, in the normal mode without performing an FRC operation, frames next to the last frame of the plurality of second frames (e.g., frames corresponding to times after the time corresponding to the last frame) among the plurality of first frames of the video, when the second user input is released.

In an embodiment, the processor 230 may generate a plurality of interpolation frames by performing an FRC operation for each of the plurality of second frames.

In an embodiment, in FIG. 5, it is assumed that the plurality of first frames included in a video are frames generated at a frame rate of 30 FPS, and the plurality of first frames are played back at the frame rate of 30 FPS. In FIG. 5, an axis t may represent a time including times where a video is played back. In FIG. 5, a frame 511 is a frame played back at a time 0 ms, and a frame 512 may be a frame immediately next to the frame 511 (e.g., a frame corresponding to a time (about 33 ms) immediately next to the time 0 ms of the frame 511) among the plurality of first frames.

In an embodiment, the processor 230 may generate one or more interpolation frames 511-1, 511-2, 511-3 by performing an FRC operation for the frame 511 and the frame 512. For example, the processor 230 may generate one or more interpolation frames 511-1, 511-2, 511-3 to be interpolated between the frame 511 and the frame 512, based on a degree of change (e.g., the magnitude and/or direction of the motion vector) between the frame 511 and the frame 512, using an artificial intelligence model for performing an FRC operation. For example, the processor 230 (e.g., NPU and/or AP) may calculate a motion vector (e.g., a moving direction and/or moving position of an object 521 (e.g., a vehicle)) between the frame 511 and the frame 512, using an artificial intelligence model for performing an FRC operation. The processor 230 (e.g., GPU and/or AP) may generate one or more interpolation frames 511-1, 511-2, 511-3 that may cause the object 521 to appear to move more continuously (without being choppy) between the frame 511 and the frame 512, based on the calculated motion vector.

In an embodiment, in FIG. 5, the processor 230 may sequentially display the generated one or more interpolation frames 511-1, 511-2, 511-3 through the touch display 210, based on the one or more interpolation frames 511-1, 511-2, 511-3 being generated after the frame 511 is displayed. The processor 230 may display the frame 512 immediately next to the frame 511 through the touch display 210, after sequentially displaying the one or more interpolation frames 511-1, 511-2, 511-3.

In an embodiment, in FIG. 5, the processor 230 may repeatedly perform the above-described operation, based on the second user input being maintained when displaying at least one frame subsequent to the frame 511. For example, the processor 230 may perform operations substantially the same as the operation of performing an FRC operation based on the frame 511 and the frame 512 and displaying one or more interpolation frames obtained by the FRC operation, for the frame 512 and a frame immediately next to the frame 512 among the plurality of first frames, based on the second user input being maintained when the frame 512 is displayed.

In an embodiment, the processor 230 may set a number of one or more interpolation frames to be interpolated between a frame and a frame immediately next to (or immediately before) the frame (hereinafter, referred to as "number of one or more interpolation frames between frames"), for each of the plurality of second frames.

In an embodiment, the processor 230 may set the number of one or more interpolation frames between frames to a fixed number, based on a user input (or a developer of an application performing an operation of providing a video, or a policy related to the application). For example, the processor 230 may set the number of one or more interpolation frames between frames to 1, 3, or 7 as a fixed number, based on a user input.

In an embodiment, the processor 230 may variably set (or determine) the number of one or more interpolation frames between frames. For example, the processor 230 may variably set the number of one or more interpolation frames between frames, based on a degree of change (e.g., the magnitude and/or direction of the motion vector) of frames. The processor 230 may set the number of one or more interpolation frames between frames such that the number of one or more interpolation frames increases as the magnitude of the motion vector between frames increases, and the number of one or more interpolation frames decreases as the magnitude of the motion vector between frames decreases. The processor 230 may not generate an interpolation frame between frames when the magnitude of the motion vector between frames is equal to or less than a threshold (e.g., when there is no change between frames). However, the operation of variably setting the number of one or more interpolation frames between frames is not limited to the above-described examples. For example, the processor 230 may variably set the number of one or more interpolation frames between frames, based on a user interaction corresponding to the second user input (e.g., a drag input, an intensity of a pressure by a touch). The operation of variably setting the number of one or more interpolation frames between frames based on the user interaction corresponding to the second user input is described below in detail.

Hereinafter, an operation of playing back the plurality of second frames and the generated plurality of interpolation frames (e.g., the plurality of interpolation frames generated by performing an FRC operation for the plurality of second frames while the second user input is maintained) while a video is played back is referred to as "temporal zoom" (or "temporal zoom operation" or "temporal zoom function"). In an embodiment, a temporal zoom may be an operation for playing back a video being played back (e.g., an original video) in the slow motion mode.

In an embodiment, the processor 230 may not store the generated plurality of interpolation frames in the memory 220, after the generated plurality of interpolation frames (and the plurality of second frames) are played back. For example, the processor 230 may store the plurality of interpolation frames in a buffer when the plurality of interpolation frames is obtained. The processor 230 may delete the plurality of interpolation frames from the buffer, after the plurality of interpolation frames is played back.

In an embodiment, the processor 230 may store, in the memory 220, a time corresponding to the initial frame (e.g., a time corresponding to the initial frame among the plurality of times corresponding to the plurality of first frames of the video) being played back through the touch display 210 at the time of the second user input (e.g., at the time of the touch first input in the case of a long press) among the plurality of first frames and a time corresponding to the last frame (e.g., a time corresponding to the last frame among the plurality of times corresponding to the plurality of first frames of the video) being played back through the touch display 210 at the end of the second user input among the plurality of first frames. Hereinafter, a time interval including the time corresponding to the initial frame, the time corresponding to the last frame, and times between the time corresponding to the initial frame and the time corresponding to the last frame is referred to as "time interval where a temporal zoom is performed".

In an embodiment, the operation of storing the time interval where a temporal zoom is performed may include an operation of storing the time corresponding to the initial frame and the time corresponding to the last frame.

In the above-described examples, it has been described that the plurality of interpolation frames are deleted from the buffer after the plurality of interpolation frames are played back, and the time interval where a temporal zoom is performed is stored in the memory 220, but this is not limiting. For example, the processor 230 may store the generated plurality of interpolation frames in the memory 220 independently of (e.g., as a separate file from) a video (a video including the plurality of first frames), when the plurality of interpolation frames is obtained (e.g., generated). For example, the processor 230 may store, in the memory 220, a video in which the generated plurality of interpolation frames and a video (a video including the plurality of first frames) are combined, when the plurality of interpolation frames is obtained.

In the above-described examples, it has been exemplified that a temporal zoom is performed while the second user input is maintained, but this is not limiting. For example, when the second user input includes a user input for starting an FRC operation and a user input for ending an FRC operation, the processor 230 may perform a temporal zoom from a time when the user input for starting an FRC operation is obtained to a time when the user input for ending an FRC operation is obtained.

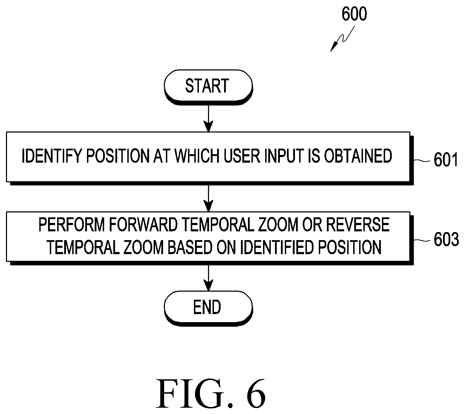

FIG. 6 is a flowchart 600 illustrating a method of providing a video based on a position where a user input is obtained according to an embodiment.

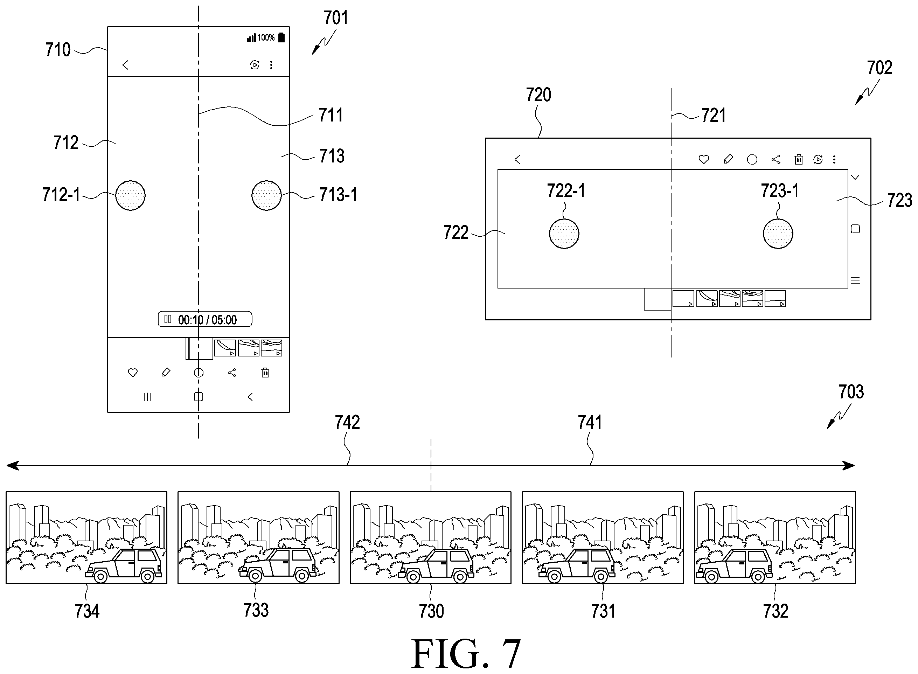

FIG. 7 is a view illustrating a method of providing a video based on a position where a user input is obtained according to an embodiment.

Referring to FIGS. 6 and 7, in an embodiment, operations described with reference to FIGS. 6 and 7 may be operations included in operations 303 to 307 of FIG. 3.

In operation 301, in an embodiment, the processor 230 may identify a position where a user input (e.g., the second user input) is obtained.

In an embodiment, the processor 230 may set a first region causing a forward temporal zoom to be performed while the second user input is input for the first region and a second region causing a reverse temporal zoom to be performed while the second user input is input for the second region, for a screen displayed while a video is played back.

In an embodiment, a forward temporal zoom may be an operation of performing a temporal zoom for frames from an initial frame being played back through the touch display 210 at the time of the second user input among the plurality of first frames to frames next to the initial frame (e.g., the initial frame and frames subsequent to the initial frame consecutive to the initial frame). For example, a forward temporal zoom may be an operation of performing a temporal zoom for the plurality of second frames including frames corresponding to times subsequent to the time of the initial frame, from the initial frame while the second user input is maintained.

In an embodiment, a reverse temporal zoom may be an operation of performing a temporal zoom for frames from an initial frame being played back through the touch display 210 at the time of the second user input among the plurality of first frames to frames previous to the initial frame (e.g., the initial frame and frames previous to the initial frame consecutive to the initial frame). For example, a reverse temporal zoom may be an operation of performing a temporal zoom for the plurality of second frames including frames corresponding to times preceding the time of the initial frame, from the initial frame while the second user input is maintained.

In an embodiment, at reference numeral 701 of FIG. 7, the processor 230 may set a right region with respect to a vertical axis 711 passing through a center of a screen displayed through the touch display 210 as a first region 713 for a forward temporal zoom, and set a left region with respect to the vertical axis 711 as a second region 712 for a reverse temporal zoom, while in a portrait mode of the electronic device 201.

In an embodiment, at reference numeral 702 of FIG. 7, the processor 230 may set a right region with respect to a vertical axis 721 passing through a center of a screen displayed through the touch display 210 as a first region 723 for a forward temporal zoom, and set a left region with respect to the vertical axis 721 as a second region 722 for a reverse temporal zoom, while in a landscape mode of the electronic device 201.

However, the method of setting a region for a forward temporal zoom and a region for a reverse temporal zoom is not limited to the above-described examples.

In operation 603, in an embodiment, the processor 230 may perform a forward temporal zoom or a reverse temporal zoom based on a position where a user input (e.g., the second user input) is obtained.

In an embodiment, the processor 230 may perform a forward temporal zoom when a position where the second user input is obtained (and maintained) is included in a region for a forward temporal zoom. For example, at reference numeral 701, the processor 230 may perform a forward temporal zoom when a position 713-1 where the second user input is obtained is included in the first region 713 for a forward temporal zoom. The processor 230 may perform a reverse temporal zoom when a position 712-1 where the second user input is obtained is included in the second region 712 for a reverse temporal zoom. For example, at reference numeral 702, the processor 230 may perform a forward temporal zoom when a position 723-1 where the second user input is obtained is included in the first region 723 for a forward temporal zoom. The processor 230 may perform a reverse temporal zoom when a position 722-1 where the second user input is obtained is included in the second region 722 for a reverse temporal zoom.

In an embodiment, at reference numeral 703, a frame 732 may be a frame immediately next to an initial frame 730 being played back through the touch display 210 at the time of the second user input among the plurality of first frames, and a frame 734 may be a frame immediately previous to the initial frame 730 among the plurality of first frames.

In an embodiment, the processor 230 may generate an interpolation frame 731 by performing an FRC operation for the initial frame 730 and the frame 732 when a forward temporal zoom is performed, and may sequentially play back the initial frame 730, the interpolation frame 731, and the frame 732 through the touch display 210 after playing back the initial frame 730.

In an embodiment, the processor 230 may generate an interpolation frame 733 by performing an FRC operation for the initial frame 730 and the frame 734 when a reverse temporal zoom is performed, and may sequentially play back the initial frame 730, the interpolation frame 733, and the frame 734 through the touch display 210 after playing back the initial frame 730.

In an embodiment, at reference numeral 703, reference numeral 741 may represent an order (or direction) of playing back the plurality of second frames and the plurality of interpolation frames when a forward temporal zoom is performed. At reference numeral 703, reference numeral 742 may represent an order (or direction) of playing back the plurality of second frames and the plurality of interpolation frames when a reverse temporal zoom is performed.

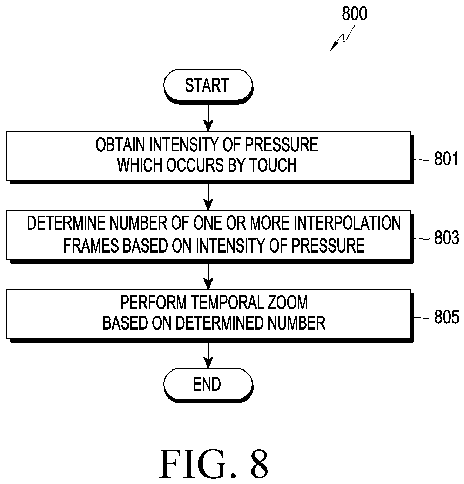

FIG. 8 is a flowchart 800 illustrating a method of providing a video based on an intensity of a pressure which occurs by a touch according to an embodiment.

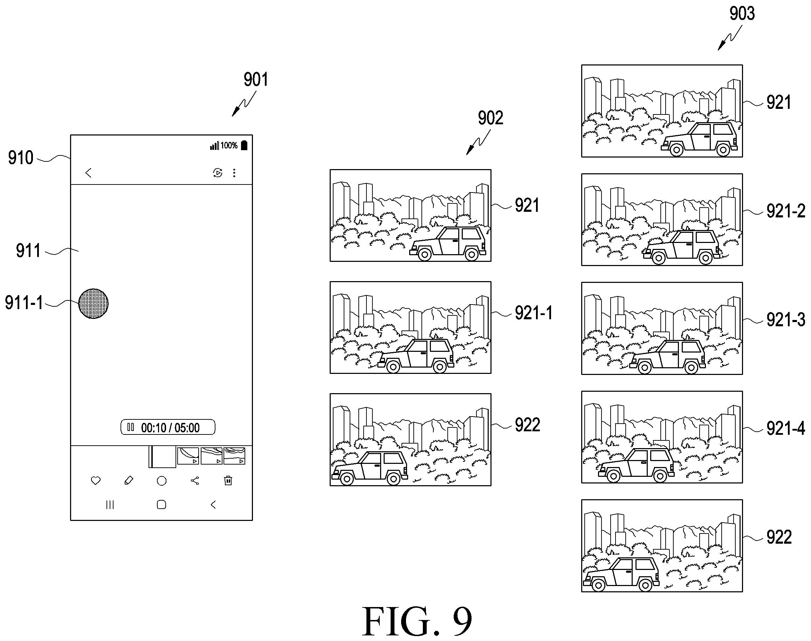

FIG. 9 is a view illustrating a method of providing a video based on an intensity of a pressure which occurs by a touch according to an embodiment.

Referring to FIGS. 8 and 9, in an embodiment, operations described with reference to FIGS. 8 and 9 may be operations included in operations 303 to 307 of FIG. 3.

In operation 801, in an embodiment, the processor 230 may obtain an intensity of a pressure which occurs by the touch, when the second user input includes an input made by a touch on the touch display 210.

In an embodiment, the processor 230 may obtain (e.g., measure) an intensity of a pressure which occurs by a touch (e.g., a touch on the touch display 210 for inputting the second user input) on the touch display 210 through a sensor (e.g., a capacitive touch sensor or a pressure sensor), while a video is played back. However, the method of obtaining an intensity of a pressure which occurs by a touch is not limited to the above-described capacitive touch sensor or pressure sensor.

In an embodiment, reference numeral 901 of FIG. 9 may represent a screen 910 displayed through the touch display 210 while a video is played back. At reference numeral 901, the processor 230 may obtain (e.g., measure) an intensity of a pressure which occurs by a touch 911-1 (e.g., a touch for inputting the second user input) on a region 911 in which a video is played back within the screen 910.

In operation 803, in an embodiment, the processor 230 may determine a number of one or more interpolation frames to be interpolated between frames, based on the intensity of the pressure.

In an embodiment, the processor 230 may determine the number of the one or more frames such that the intensity of the pressure which occurs by the touch corresponds to a number of one or more interpolation frames to be interpolated between frames. For example, the processor 230 may determine the number of the one or more interpolation frames such that a number of one or more interpolation frames to be interpolated between a frame and a frame immediately next to (or immediately before) the frame by performing an FRC operation for the plurality of second frames increases as the intensity of the pressure which occurs by the touch increases. For example, the processor 230 may determine the number of the one or more interpolation frames such that a number of one or more interpolation frames to be interpolated between a frame and a frame immediately next to (or immediately before) the frame by performing an FRC operation for the plurality of second frames decreases as the intensity of the pressure which occurs by the touch decreases.

In operation 805, in an embodiment, the processor 230 may perform a temporal zoom based on the determined number of the one or more interpolation frames.

In an embodiment, at reference numeral 902 of FIG. 9, the processor 230 may generate one interpolation frame 921-1 between an initial frame 921 being played back through the touch display 210 at the time of the second user input among the plurality of first frames and a frame 922 immediately next to the initial frame 921, and may sequentially play back the interpolation frame 921-1 and the frame 922 immediately next to the initial frame 921 through the touch display 210 after the initial frame 921 is played back, based on the intensity of the pressure which occurs by the touch being a first intensity.

In an embodiment, at reference numeral 903 of FIG. 9, the processor 230 may generate three interpolation frames 921-2, 921-3, 921-4 between an initial frame 921 being played back through the touch display 210 at the time of the second user input among the plurality of first frames and a frame 922 immediately next to the initial frame 921, and may sequentially play back the three interpolation frames 921-2, 921-3, 921-4 and the frame 922 through the touch display 210 after the initial frame 921 is played back, based on the intensity of the pressure which occurs by the touch being a second intensity greater than the first intensity.

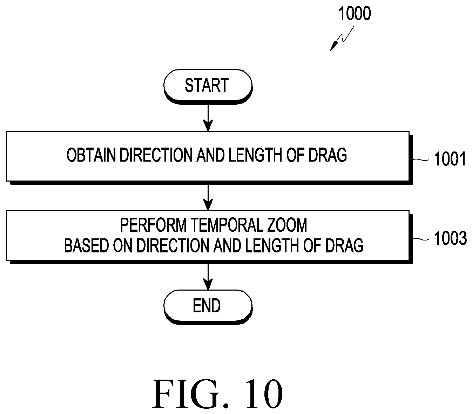

FIG. 10 is a flowchart 1000 illustrating a method of providing a video based on a drag according to an embodiment.

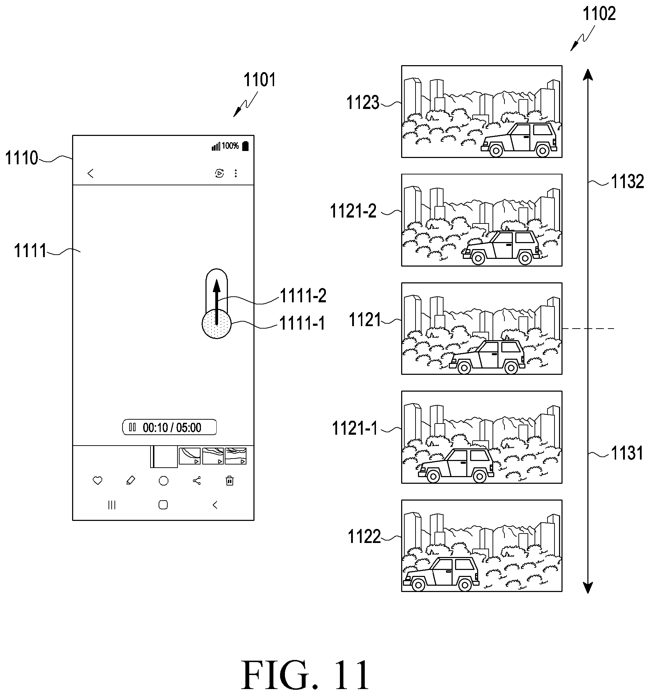

FIG. 11 is a view illustrating a method of providing a video based on a drag according to an embodiment.

Referring to FIGS. 10 and 11, in an embodiment, operations described with reference to FIGS. 10 and 11 may be operations included in operations 303 to 307 of FIG. 3.

In operation 1001, in an embodiment, the processor 230 may obtain a direction and a length of a drag, based on the second user input being an input made by a drag.

In an embodiment, at reference numeral 1101 of FIG. 11, the processor 230 may obtain a second user input made by a drag (e.g., a user interaction of touching 1111-1 and moving 1111-2 the touch while maintaining the touch 1111-1) on a first region 1111 of a screen 1110, while a video is played back.

In an embodiment, the processor 230 may obtain the direction and the length (e.g., a distance that the touch moves) of the drag, based on data sensed through a touch sensor.

In operation 1003, in an embodiment, the processor 230 may perform a temporal zoom based on the direction and the length of the drag.

In an embodiment, the processor 230 may determine to perform a forward temporal zoom or a reverse temporal zoom, based on the direction of the drag. For example, at reference numeral 1102 of FIG. 11, an interpolation frame 1121-1 may be an interpolation frame generated by performing an FRC operation for a current frame 1121 and a frame 1122 immediately next to the current frame 1121 among the plurality of first frames. An interpolation frame 1121-2 may be an interpolation frame generated by performing an FRC operation for a current frame 1121 and a frame 1123 immediately previous to the current frame 1121 among the plurality of first frames. The processor 230 may determine to perform a forward temporal zoom of playing back the current frame 1121, the interpolation frame 1121-1, and the frame 1122 after generating the interpolation frame 1121-1, based on the direction of the drag being a first direction (e.g., a direction toward the top of the screen 1110). The processor 230 may determine to perform a reverse temporal zoom of playing back the current frame 1121, the interpolation frame 1121-2, and the frame 1123 after generating the interpolation frame 1121-2, based on the direction of the drag being a second direction different from the first direction (e.g., a direction toward the lower surface of the screen 1110).

In an embodiment, at reference numeral 1102, reference numeral 1131 may represent an order (or direction) of playing back the plurality of second frames and the plurality of interpolation frames when a forward temporal zoom is performed. At reference numeral 1102, reference numeral 1132 may represent an order (or direction) of playing back the plurality of second frames and the plurality of interpolation frames when a reverse temporal zoom is performed.

In an embodiment, the processor 230 may determine a number of one or more interpolation frames to be interpolated between a frame and a frame immediately next to or previous to the frame, for each of the plurality of second frames, based on the length of the drag. For example, the processor 230 may determine the number of one or more interpolation frames between frames such that the number of one or more interpolation frames between frames corresponds to the length of the drag. The processor 230 may determine the number of one or more interpolation frames between frames such that the number of one or more interpolation frames between frames increases as the length of the drag increases. The processor 230 may determine the number of one or more interpolation frames between frames such that the number of one or more interpolation frames between frames decreases as the length of the drag decreases.

In the above-described examples, it has been exemplified that the number of one or more interpolation frames between frames is determined based on the length of the drag, but this is not limiting. In an embodiment, the processor 230 may determine the number of one or more interpolation frames between frames, based on a speed of the drag (e.g., the length of the drag per unit time). For example, the processor 230 may determine the number of one or more interpolation frames between frames such that the number of one or more interpolation frames between frames corresponds to the speed of the drag. The processor 230 may determine the number of one or more interpolation frames between frames such that the number of one or more interpolation frames between frames increases as the speed of the drag increases (e.g., as the speed of the drag increases). The processor 230 may determine the number of one or more interpolation frames between frames such that the number of one or more interpolation frames between frames decreases as the speed of the drag decreases (e.g., as the speed of the drag is slower).

In an embodiment, the processor 230 may perform a forward temporal zoom or a reverse temporal zoom determined by the direction, based on the number of one or more interpolation frames between frames determined by the length of the drag.

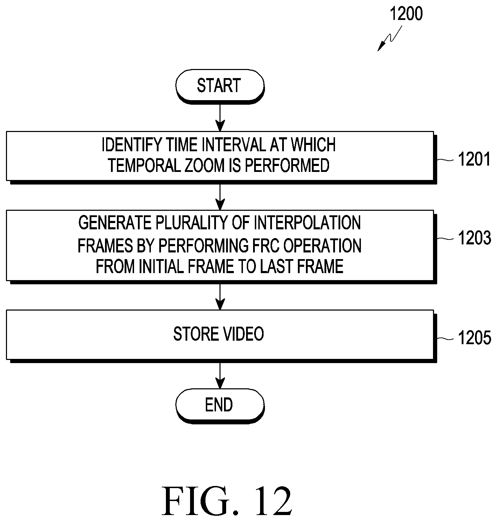

FIG. 12 is a flowchart 1200 illustrating a method of storing a video of a time interval where a temporal zoom is performed according to an embodiment.

Referring to FIG. 12, in an embodiment, FIG. 12 may include operations performed after a temporal zoom is performed through the operations of FIG. 3.

In operation 1201, in an embodiment, the processor 230 may identify a time interval where a temporal zoom is performed, based on a user input.

In an embodiment, as described with reference to FIG. 3, the processor 230 may store the time interval where a temporal zoom is performed in the memory 220, after a temporal zoom is performed. For example, the processor 230 may store, in the memory 220, a time (hereinafter, referred to as a "first time") corresponding to an initial frame (e.g., a time corresponding to the initial frame among a plurality of times corresponding to the plurality of first frames of the video) being played back through the touch display 210 at the time of the second user input among the plurality of first frames and a time (hereinafter, referred to as a "second time") corresponding to a last frame (e.g., a time corresponding to the last frame among the plurality of times corresponding to the plurality of first frames of the video) being played back through the touch display 210 at the end of the second user input among the plurality of first frames.

In an embodiment, the processor 230 may obtain a user input for storing a video of a time interval where a temporal zoom was performed (e.g., a video including frames of the time interval where a temporal zoom was performed), after a temporal zoom is performed. The processor 230 may identify the time interval where a temporal zoom was performed, based on the obtained user input. For example, the processor 230 may identify the first time and the second time in the time interval where a temporal zoom was performed.

In operation 1203, in an embodiment, the processor 230 may generate a plurality of interpolation frames by performing an FRC operation from an initial frame (a frame corresponding to the first time) to a last frame (a frame corresponding to the second time), based on the first time and the second time. For example, the processor 230 may generate a plurality of interpolation frames by performing an FRC operation for each of the plurality of second frames from the frame corresponding to the first time to the frame corresponding to the second time, based on the first time and the second time.

In operation 1205, in an embodiment, the processor 230 may store a video including the plurality of second frames and the plurality of interpolation frames in the memory 220.

In an embodiment, the processor 230 may generate a video by combining the plurality of second frames and the plurality of interpolation frames, based on generating the plurality of interpolation frames in operation 1203. For example, the processor 230 may generate a video of the time interval where a temporal zoom was performed, by interpolating the plurality of interpolation frames between the plurality of second frames. The processor 230 may store the generated video in the memory 220.

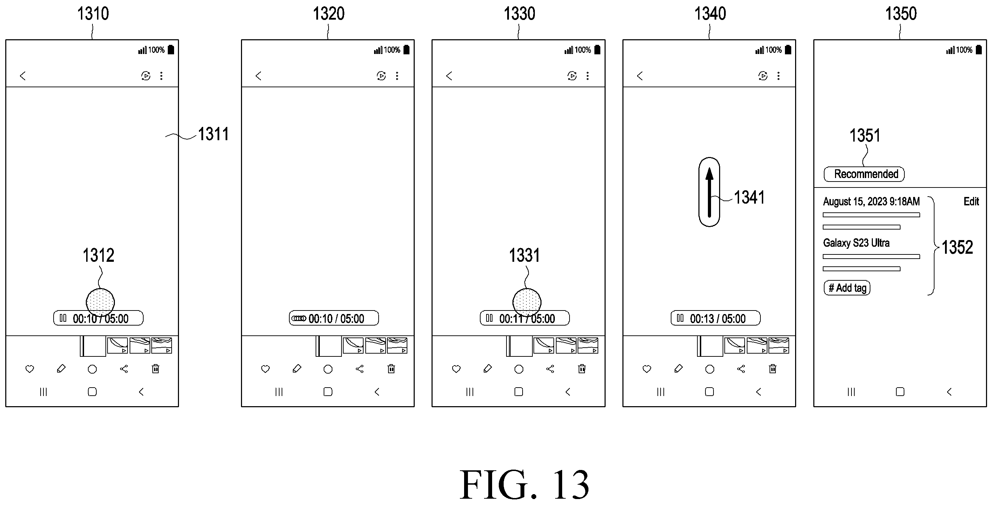

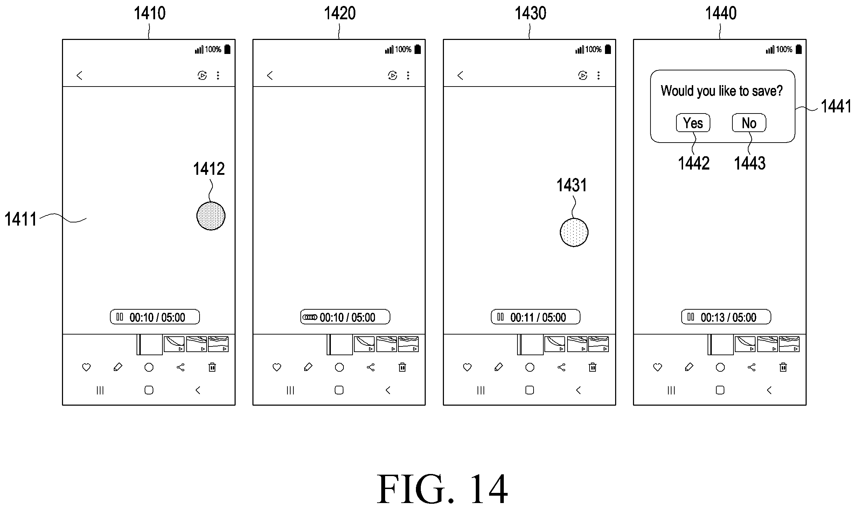

Hereinafter, a method of storing a video of a time interval where a temporal zoom is performed is described with reference to FIGS. 13 and 14.

FIG. 13 is a view illustrating a method of storing a video of a time interval where a temporal zoom is performed according to an embodiment.

Referring to FIG. 13, in an embodiment, the processor 230 may display a screen 1310 including a video played back based on a first user input through the touch display 210. The processor 230 may obtain a second user input (or an input made at the time of a touch 1312 for starting a temporal zoom) for a first region 1311 in which a video is played back while displaying the screen 1310. Reference numeral 1320 may represent a screen while a temporal zoom is being performed while the second user input is maintained. Reference numeral 1330 may represent a screen at the end of the second user input (or at the time of a touch 1331 for ending a temporal zoom).

In an embodiment, the processor 230 may display a screen 1340 in which frames corresponding to a time interval subsequent to the time interval of the temporal zoom among the plurality of first frames are played back through the touch display 210, after a temporal zoom is ended. The processor 230 may obtain a user input 1341 for displaying detailed information of a video being played back, while the screen 1340 is displayed. The processor 230 may display, through the touch display 210, a screen 1350 including detailed information 1352 of a video being played back and an object 1351 for storing (or recommending) a video of the time interval where a temporal zoom was performed, based on the obtained user input 1341. The processor 230 may store only a video of the time interval where a temporal zoom was performed (e.g., a video including the plurality of second frames and the plurality of interpolation frames) in the memory 220, by performing the operations described with reference to operations 1201 to 1205 based on a user input for the object 1351.

FIG. 14 is a view illustrating a method of storing a video of a time interval where a temporal zoom is performed according to an embodiment.

Referring to FIG. 14, in an embodiment, the processor 230 may display a screen 1410 including a video played back based on a first user input through the touch display 210. The processor 230 may obtain a second user input (or an input made at the time of a touch 1412 for starting a temporal zoom) for a first region 1411 in which a video is played back while displaying the screen 1410. Reference numeral 1420 may represent a screen while a temporal zoom is being performed while the second user input is maintained. Reference numeral 1430 may represent a screen at the end of the second user input (or at the time of a touch 1431 for ending a temporal zoom).

In an embodiment, the processor 230 may display a screen 1440 including information 1441 inquiring whether to store a video of the time interval where a temporal zoom was performed through the touch display 210, after a temporal zoom is ended. The processor 230 may store only a video of the time interval where a temporal zoom was performed (e.g., a video including the plurality of second frames and the plurality of interpolation frames) in the memory 220, by performing the operations described with reference to operations 1201 to 1205 based on a user input for an object 1442 included in the information 1441. The processor 230 may not store a video of the time interval where a temporal zoom was performed, based on a user input for an object 1443 included in the information 1441.

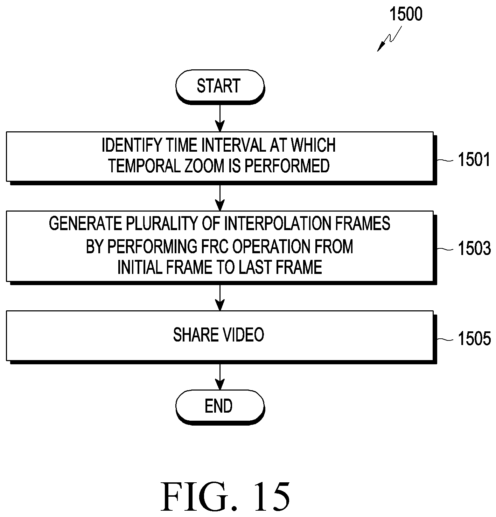

FIG. 15 is a flowchart 1500 illustrating a method of sharing a video of a time interval where a temporal zoom is performed according to an embodiment.

Referring to FIG. 15, in an embodiment, FIG. 15 may include operations performed after a temporal zoom is performed through the operations of FIG. 3.

In operation 1501, in an embodiment, the processor 230 may identify a time interval where a temporal zoom is performed, based on a user input.

In an embodiment, as described with reference to FIG. 3, the processor 230 may store the time interval where a temporal zoom is performed in the memory 220, after a temporal zoom is performed.

In an embodiment, as described with reference to FIG. 3, the processor 230 may store the time interval where a temporal zoom is performed in the memory 220, after a temporal zoom is performed. For example, the processor 230 may store, in the memory 220, a first time corresponding to an initial frame being played back through the touch display 210 at the time of the second user input among the plurality of first frames and a second time corresponding to a last frame being played back through the touch display 210 at the end of the second user input among the plurality of first frames.

In an embodiment, the processor 230 may obtain a user input for sharing a video of the time interval where a temporal zoom was performed with an external electronic device and/or another application stored in the electronic device 201, after a temporal zoom is performed. The processor 230 may identify the time interval where a temporal zoom was performed, based on the obtained user input. For example, the processor 230 may identify a first time and a second time in the time interval where a temporal zoom was performed.

In operation 1503, in an embodiment, the processor 230 may generate a plurality of interpolation frames by performing an FRC operation from an initial frame (a frame corresponding to the first time) to a last frame (a frame corresponding to the second time), based on the first time and the second time. For example, the processor 230 may generate a plurality of interpolation frames by performing an FRC operation for each of the plurality of second frames from the frame corresponding to the first time to the frame corresponding to the second time, based on the first time and the second time.

In operation 1505, in an embodiment, the processor 230 may share a video including the plurality of second frames and the plurality of interpolation frames.

In an embodiment, the processor 230 may generate a video by combining the plurality of second frames and the plurality of interpolation frames, based on generating the plurality of interpolation frames in operation 1503. For example, the processor 230 may generate a video of the time interval where a temporal zoom was performed, by interpolating the plurality of interpolation frames between the plurality of second frames. The processor 230 may share the generated video.

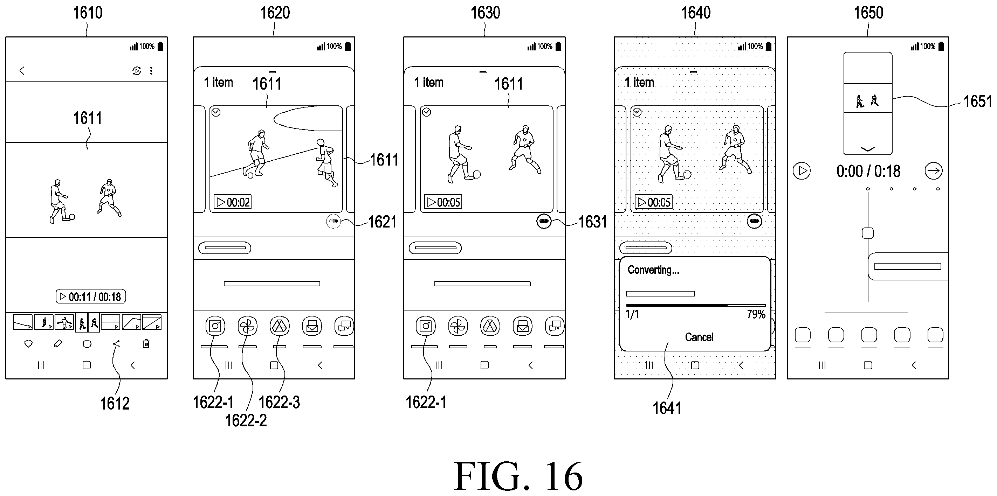

Hereinafter, a method of sharing a video of a time interval where a temporal zoom is performed is described with reference to FIG. 16.

FIG. 16 is a view illustrating a method of sharing a video of a time interval where a temporal zoom is performed according to an embodiment.

Referring to FIG. 16, in an embodiment, the processor 230 may store the time interval where a temporal zoom was performed in the memory 220, after a temporal zoom is performed while a video is played back. The processor 230 may display a screen 1610 in which a video 1611 is played back through the touch display 210, after storing the time interval where a temporal zoom was performed, through the touch display 210.

In an embodiment, the processor 230 may display a screen 1620 including objects 1622-1, 1622-2, 1622-3 (e.g., icons) corresponding to applications subject to sharing and an object 1621 suggesting sharing of a video of the time interval where a temporal zoom was performed through the touch display 210, based on a user input for an object 1612 (e.g., an object to which a sharing function is mapped) for sharing within the screen 1610. The processor 230 may display a screen 1630 including an object 1631 for sharing a video of the time interval where a temporal zoom was performed through the touch display 210, based on a user input for the object 1621. The processor 230 may generate a video of the time interval where a temporal zoom was performed by performing operations 1501 and 1503, based on a user input of selecting the object 1631 and selecting an object 1622-1 corresponding to an application subject to sharing (e.g., an application that a user wants to share). The processor 230 may display a screen 1640 including information 1641 indicating that operations 1501 and 1503 are being performed through the touch display 210. The processor 230 may transfer the generated video to an application subject to sharing, based on generating a video of the time interval where a temporal zoom was performed. The processor 230 may execute an application subject to sharing and display a video 1651 of the time interval where a temporal zoom was performed through the touch display 210 through a screen 1650 of the executed application.

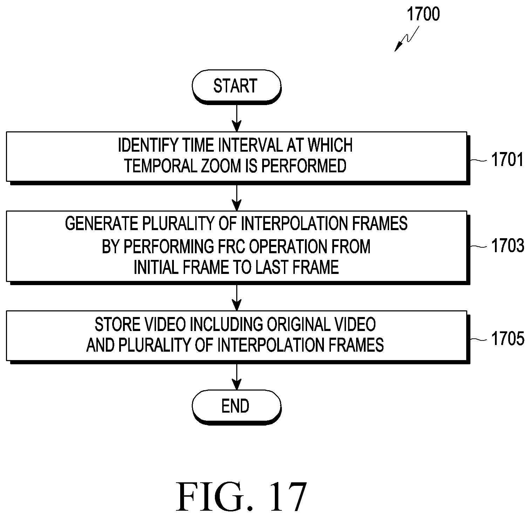

FIG. 17 is a flowchart 1700 illustrating a method of storing a video in which an original video and interpolation frames of a time interval where a temporal zoom is performed are combined according to an embodiment.

Referring to FIG. 17, in an embodiment, FIG. 17 may include operations performed after a temporal zoom is performed through the operations of FIG. 3.

In operation 1701, in an embodiment, the processor 230 may identify a time interval where a temporal zoom is performed, based on a user input.

In an embodiment, as described with reference to FIG. 3, the processor 230 may store the time interval where a temporal zoom is performed in the memory 220, after a temporal zoom is performed.

In an embodiment, as described with reference to FIG. 3, the processor 230 may store the time interval where a temporal zoom is performed in the memory 220, after a temporal zoom is performed. For example, the processor 230 may store, in the memory 220, a first time corresponding to an initial frame being played back through the touch display 210 at the time of the second user input among the plurality of first frames and a second time corresponding to a last frame being played back through the touch display 210 at the end of the second user input among the plurality of first frames.

In an embodiment, the processor 230 may obtain a user input for storing a video in which an original video and interpolation frames of the time interval where a temporal zoom is performed are combined, after a temporal zoom is performed. The processor 230 may identify the time interval where a temporal zoom was performed, based on the obtained user input. For example, the processor 230 may identify a first time and a second time in the time interval where a temporal zoom was performed.

In operation 1703, in an embodiment, the processor 230 may generate a plurality of interpolation frames by performing an FRC operation from an initial frame (a frame corresponding to the first time) to a last frame (a frame corresponding to the second time), based on the first time and the second time. For example, the processor 230 may generate a plurality of interpolation frames by performing an FRC operation for each of the plurality of second frames from the frame corresponding to the first time to the frame corresponding to the second time, based on the first time and the second time.

In operation 1705, in an embodiment, the processor 230 may store a video including an original video and the plurality of interpolation frames in the memory 220. For example, the processor 230 may store a video in which an original video and interpolation frames of the time interval where a temporal zoom was performed are combined in the memory 220.

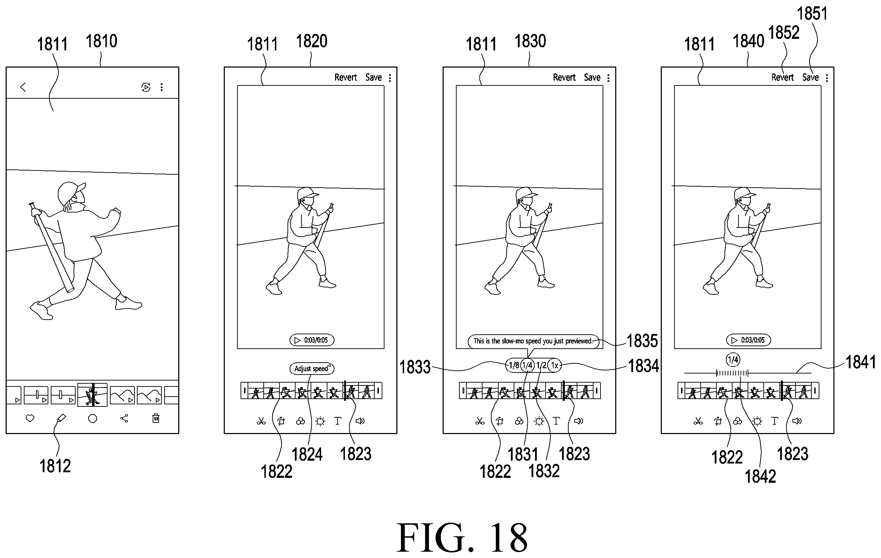

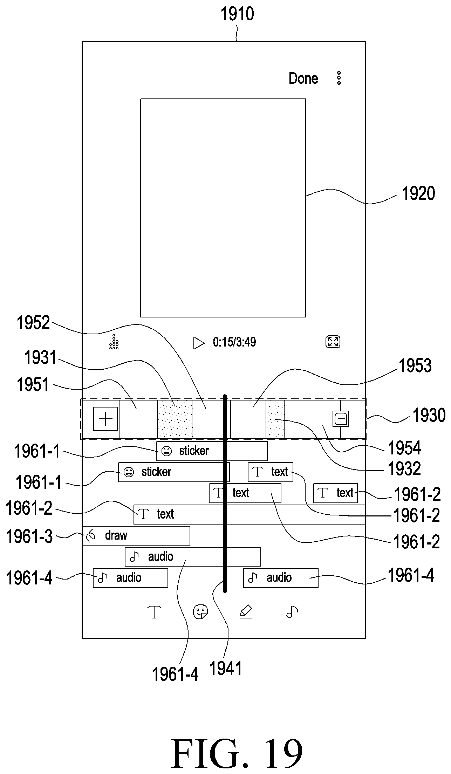

Hereinafter, a method of storing a video in which an original video and interpolation frames of a time interval where a temporal zoom is performed are combined is described with reference to FIGS. 18 and 19.

FIG. 18 is a view illustrating a method of storing a video in which an original video and interpolation frames of a time interval where a temporal zoom is performed are combined according to an embodiment.

Referring to FIG. 18, in an embodiment, the processor 230 may store the time interval where a temporal zoom was performed in the memory 220, after a temporal zoom is performed while a video is played back. The processor 230 may display a screen 1810 in which a video 1811 is played back through the touch display 210, after storing the time interval where a temporal zoom was performed, through the touch display 210.

In an embodiment, the processor 230 may pause the video 1811 based on a user input for an object 1812 for editing the video 1811 within the screen 1810. The processor 230 may display a screen 1820 including an object 1824 for controlling (e.g., adjusting) a playback speed of a video and thumbnail images 1822 of some frames among frames of the video 1811 through the touch display 210, based on the user input. The processor 230 may display an indication 1823 (also referred to as a "seek bar") for indicating a frame corresponding to a current playback time (or a current playback time) in the thumbnail images 1822.

In an embodiment, the processor 230 may display a screen 1830 including a first object 1831, a second object 1832, a third object 1833, and a fourth object 1834 through the touch display 210, based on a user input for the object 1824 for controlling a playback speed of a video.

In an embodiment, the first object 1831 may be an object for displaying a time interval of a temporal zoom most recently performed before a user input for the object 1812. The processor 230 may display the first object 1831 through the touch display 210 such that a form (e.g., color, shading) of the first object 1831 is distinguished from a form of the second object 1832 and the third object 1833. The processor 230 may display, through the touch display 210, information 1835 (e.g., "This is the slow-mo speed you just previewed.") indicating that the first object 1831 is an object for displaying a time interval of a temporal zoom most recently performed before a user input for the object 1812.

In an embodiment, the processor 230 may display a screen 1840 including an indication 1842 representing a time interval of a temporal zoom most recently performed before a user input for the object 1812 on an indication 1841 (e.g., a bar) representing a time interval of the video 1811 through the touch display 210, based on a user input for the first object 1831. The indication 1842 displayed on the indication 1841 may represent a time interval where a temporal zoom was performed relative to the current playback time indicated by the indication 1823.

In an embodiment, "1/4" included in the first object 1831 may indicate that a number of one or more interpolation frames interpolated between frames is 3. In an embodiment, "1/4" included in the first object 1831 may indicate that a speed where the video 1811 is played back is changed from 1x (1.0x) to 1/4x (0.25x) (e.g., changed to be played back more slowly from 1x to 1/4x).

In an embodiment, the second object 1832 may be an object for performing a temporal zoom in a state in which a number of one or more interpolation frames interpolated between frames is set to 1. For example, the processor 230 may perform a temporal zoom of generating one interpolation frame between frames of the video 1811 (e.g., by repeating an operation of generating one interpolation frame between a frame and an immediately next frame for a designated time) and playing back frames of the video 1811 and the generated interpolation frame while playing back the video 1811 from a current frame (e.g., a frame at the time of the pause) of the video 1811 for a designated time (e.g., about 2 seconds, about 3 seconds, or about 4 seconds), based on a user input for the second object 1832.

In an embodiment, the third object 1833 may be an object for performing a temporal zoom in a state in which a number of one or more interpolation frames interpolated between frames is set to 7. For example, the processor 230 may perform a temporal zoom of generating seven interpolation frames between frames of the video 1811 for a designated time and playing back frames of the video 1811 and the generated interpolation frames, while playing back the video 1811 from a current frame (e.g., a frame at the time of the pause) of the video 1811, based on a user input for the third object 1833.

In an embodiment, the fourth object 1834 may be an object indicating that a current playback speed of a video is 1x (1.0x).

In the above-described examples, it has been described that the indication 1842 representing the time interval of a temporal zoom most recently performed before a user input for the object 1812 is displayed based on a user input for the first object 1831, but this is not limiting. For example, the processor 230 may display indications representing time intervals of all temporal zooms performed before a user input for the object 1812 (e.g., time intervals respectively corresponding to the plurality of temporal zooms discontinuously performed, when the plurality of temporal zooms is discontinuously performed) through the touch display 210, based on a user input for the first object 1831.

In an embodiment, the processor 230 may perform operations 1701 to 1705 based on a user input for an object 1851 displayed on the screen 1840, after the screen 1840 is displayed. For example, the processor 230 may identify a time interval indicated by the indication 1842, based on a user input for the object 1851. The processor 230 may generate a plurality of interpolation frames by performing an FRC operation for frames of the identified time interval. The processor 230 may generate a video in which an original video (e.g., the plurality of first frames) and the generated plurality of interpolation frames are combined, and store the generated video in the memory 220.

In an embodiment, the processor 230 may display the screen 1830 through the touch display 210, based on a user input for an object 1852 displayed on the screen 1840, after the screen 1840 is displayed.

In an embodiment, the processor 230 may perform operations 1701 to 1705 for frames corresponding to time intervals of all temporal zooms performed before a user input for the object 1812 (e.g., time intervals respectively corresponding to the plurality of temporal zooms discontinuously performed, when the plurality of temporal zooms is discontinuously performed), based on a user input for the object 1851 displayed on the screen 1840. The processor 230 may generate a video by combining the plurality of interpolation frames generated by performing operations 1701 to 1705 for frames corresponding to the time intervals of all temporal zooms and an original video, and store the generated video in the memory 220.

FIG. 19 is a view illustrating a method of storing a video in which an original video and interpolation frames of a time interval where a temporal zoom is performed are combined according to an embodiment.

Referring to FIG. 19, in an embodiment, the processor 230 may display a screen 1910 for editing an original video through the touch display 210.

In an embodiment, the screen 1910 may include a paused original video 1920 during playback, time intervals 1951, 1952, 1953, 1954 of the original video and time intervals 1931, 1932 where temporal zooms were performed including an indication 1941 for indicating a current playback time, and time intervals where editing was performed in the original video (and information representing tools used for editing (e.g., text, sticker, draw, audio)). For example, in FIG. 19, each piece of information 1961-1 indicated by "sticker" may represent a time interval in which a sticker (e.g., an object, or an image, or an icon) is inserted (e.g., added) based on a user input, in a time interval of an edited video including the original video and a video obtained by performing temporal zooms (e.g., the time intervals 1951, 1952, 1953, 1954 of the original video and the time intervals 1931, 1932 where temporal zooms were performed). For example, in FIG. 19, each piece of information 1961-2 indicated by "text" may represent a time interval in which text is inserted based on a user input, in the time interval of the edited video. For example, in FIG. 19, information 1961-3 indicated by "draw" may represent a time interval in which a drawn object (e.g., a line) is inserted based on a user input, in the time interval of the edited video. For example, in FIG. 19, each piece of information 1961-4 indicated by "audio" may represent a time interval in which an audio file is inserted based on a user input, in the time interval of the edited video. However, the method of editing an edited video including an original video and/or a video obtained by performing temporal zooms is not limited to the above-described examples.

In an embodiment, the processor 230 may perform operations 1701 to 1705 for frames corresponding to the time intervals 1931, 1932 where temporal zooms were performed, based on a user input obtained while the screen 1910 is displayed. The processor 230 may generate a video by combining the plurality of interpolation frames generated by performing operations 1701 to 1705 and an original video, and store the generated video in the memory 220.

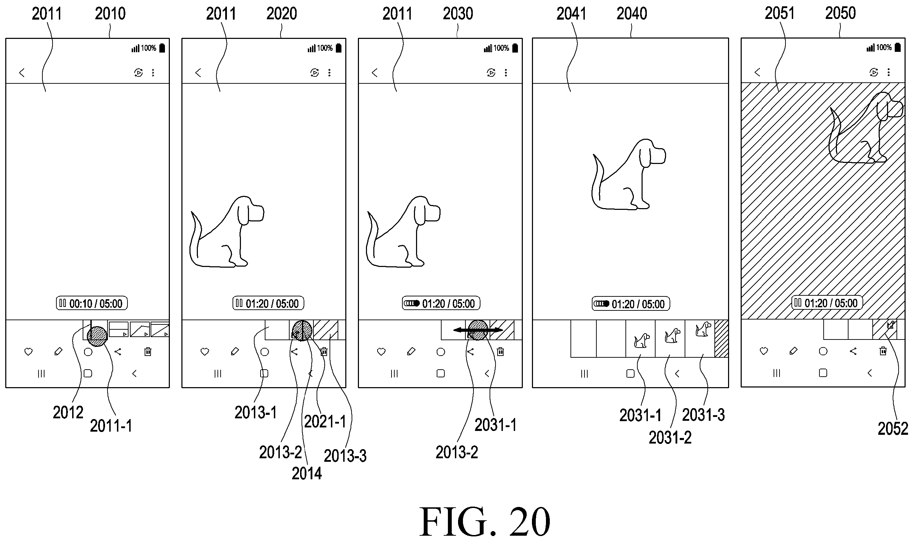

FIG. 20 is a view illustrating a method of providing a video according to an embodiment.

Referring to FIG. 20, in an embodiment, operations of FIG. 20 may be operations included in operations 303 to 307 of FIG. 3.

In an embodiment, the processor 230 may display a screen 2010 including a video 2011 being played back and a thumbnail image 2012 representing the video 2011 through the touch display 210.

In an embodiment, the processor 230 may display a screen 2020 including thumbnail images 2013-1, 2013-2, 2013-3 (e.g., decreased images of the some frames) corresponding to some frames among the plurality of first frames of the video 2011 by replacing the thumbnail image 2012, based on a user input 2011-1 for the thumbnail image 2012 (e.g., a user input made by tapping the thumbnail image 2012). In the screen 2020, an indication 2014 may be an object indicating a current playback time. The thumbnail images 2013-1, 2013-2, 2013-3 may be thumbnail images of frames corresponding to a previous time and a subsequent time with reference to the current playback time indicated by the indication 2014. In an embodiment, although not illustrated in FIG. 20, the processor 230 may enlarge and display a region in which the thumbnail images (e.g., the thumbnail images 2013-1, 2013-2, 2013-3) corresponding to some frames among the plurality of first frames of the video 2011 are displayed through the touch display 210, based on a user input 2021-1 for a frame 2013-2 including the indication 2014.

In an embodiment, the processor 230 may obtain a second user input for the thumbnail images (e.g., the thumbnail images 2013-1, 2013-2, 2013-3) (or a region in which the thumbnail images are displayed (also referred to as a "film strip region")), while a screen 2030 including a video 2011 being played back is displayed. For example, the processor 230 may obtain a second user input made by a long press on the thumbnail images (or the film strip region). For example, the processor 230 may obtain a second user input made by a pinch motion 2031-1 (e.g., a motion of moving at least one of two fingers to increase a distance between two fingers touching the touch display 210) on the thumbnail images (or the film strip region).

In an embodiment, the processor 230 may perform a temporal zoom based on the second user input (e.g., the second user input made by the pinch motion 2031-1). For example, the processor 230 may play back a video 2041 including the plurality of interpolation frames generated by performing an FRC operation for the plurality of second frames and the plurality of second frames, based on the second user input.

In an embodiment, the processor 230 may display a screen 2040 including the video 2041 and thumbnail images 2031-1, 2031-2, 2031-3 (e.g., thumbnail images of interpolation frames) of at least a portion of the video 2041 displayed in a film strip region through the touch display 210, while playing back the video 2041 including the plurality of interpolation frames and the plurality of second frames.

In an embodiment, the processor 230 may display a screen 2050 including frames (e.g., a frame 2051) corresponding to times subsequent to the time interval of the temporal zoom and a thumbnail image (e.g., a thumbnail image 2052 of the frame 2051) of some of the frames through the touch display 210, based on the second user input being released.

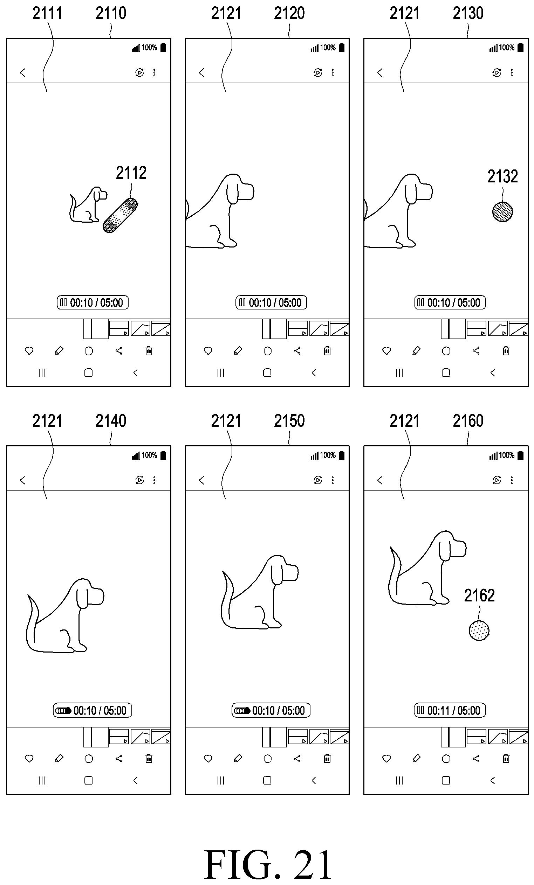

FIG. 21 is a view illustrating a method of providing a video according to an embodiment.

Referring to FIG. 21, in an embodiment, operations of FIG. 21 may be operations included in operations 303 to 307 of FIG. 3.

In an embodiment, the processor 230 may display a screen 2110 including a video 2111 being played back through the touch display 210. The processor 230 may obtain a user input 2112 for enlarging the video 2111 (e.g., for displaying the video 2111 in an enlarged manner) (e.g., a user input for zooming in on the video 2111), while the screen 2110 is displayed.

In an embodiment, the processor 230 may display a screen 2120 including an enlarged video 2121 through the touch display 210, based on the user input 2112.

In an embodiment, the processor 230 may perform a temporal zoom for enlarged plurality of second frames of the video 2121, based on a second user input while the enlarged video 2121 is played back. For example, the processor 230 may generate a plurality of interpolation frames by performing an FRC operation for the plurality of second frames from a frame corresponding to a first time when a user input 2132 for starting a temporal zoom is obtained to a frame corresponding to a second time when a user input 2162 for ending a temporal zoom is obtained. The processor 230 may display the enlarged frames of the plurality of second frames and the enlarged frames of the plurality of interpolation frames from the first time to the second time through the touch display 210, as illustrated in screens 2130, 2140, 2150, and 2160 displayed sequentially.

In the above-described examples, it has been described that a temporal zoom is performed for an enlarged video after enlarging a video, but this is not limiting. For example, the processor 230 may perform a temporal zoom for a reduced video by performing operations at least partially identical or similar to the above-described examples, after reducing a video.

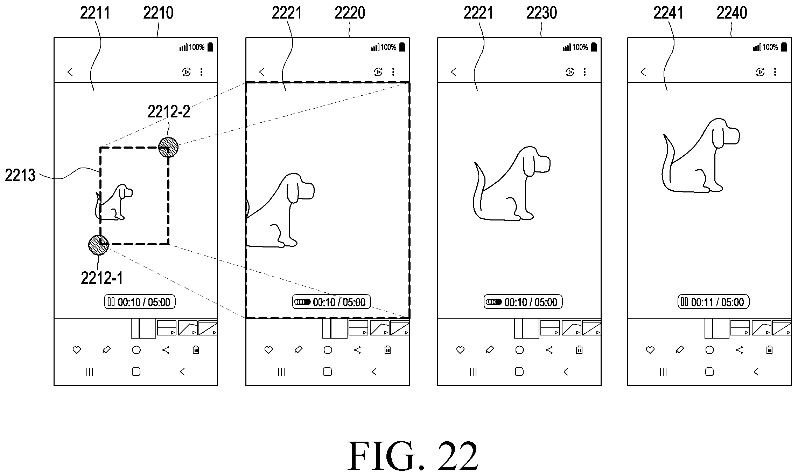

FIG. 22 is a view illustrating a method of providing a video according to an embodiment.

Referring to FIG. 22, in an embodiment, operations of FIG. 22 may be operations included in operations 303 to 307 of FIG. 3.

In an embodiment, the processor 230 may display a screen 2210 including a video 2211 being played back through the touch display 210.

In an embodiment, the processor 230 may set a region to be displayed through the touch display 210 within the video 2211 and perform a temporal zoom for enlarged frames of the set region, based on a second user input maintained while the screen 2210 is displayed.

In an embodiment, the processor 230 may identify points 2212-1, 2212-2 input by a touch using at least two fingers (e.g., a touch for inputting the second user input), while the screen 2210 is displayed. The processor 230 may set a region 2213 to be displayed through the touch display 210 within the video 2211 based on the points 2212-1, 2212-2.

In an embodiment, the processor 230 may perform a temporal zoom based on the plurality of second frames in which the set region 2213 within the video 2211 is displayed in an enlarged manner. For example, the processor 230 may generate a plurality of interpolation frames by performing an FRC operation for the plurality of second frames, while the touch is maintained after touching the points 2212-1, 2212-2. The processor 230 may play back the region 2213 set by the points 2212-1, 2212-2 in an enlarged manner in each of the plurality of second frames and the generated plurality of interpolation frames, as illustrated in the screens 2220, 2230, and 2240 displayed sequentially, while the touch is maintained after touching the points 2212-1, 2212-2.

In an embodiment, the processor 230 may re-set a region (e.g., the region 2213) to be displayed through the touch display 210 within a video based on positions of the changed points, when positions of points input by a touch using at least two fingers (e.g., a touch for inputting the second user input) (e.g., the points 2212-1, 2212-2) are changed. The processor 230 may play back the re-set region in an enlarged or decreased manner in each of the plurality of second frames and the plurality of interpolation frames, when the plurality of interpolation frames generated by performing an FRC operation based on the plurality of second frames and the plurality of second frames are played back.

In an embodiment, the processor 230 may perform the above-described temporal zoom for a three-dimensional (3D) video as well as a two-dimensional (2D) video. For example, the processor 230 may display a 3D video through the touch display 210.

In an embodiment, the processor 230 may change a screen (e.g., a view in which the 3D video is displayed) of a 3D video based on a user input (e.g., the second user input), while the 3D video is played back. For example, the processor 230 may display a second view illustrating the video different from the first view, based on a user interaction (e.g., a motion of rotating the electronic device 201 (or a face of a user wearing the electronic device 201), when the electronic device 201 is a virtual reality (VR) glass), while a first view (e.g., a front of the 3D video) of a video being played back is displayed.

In an embodiment, the processor 230 may perform a temporal zoom described with reference to FIGS. 2 to 22 for a 3D video, based on (or while) the user input (e.g., the second user input).

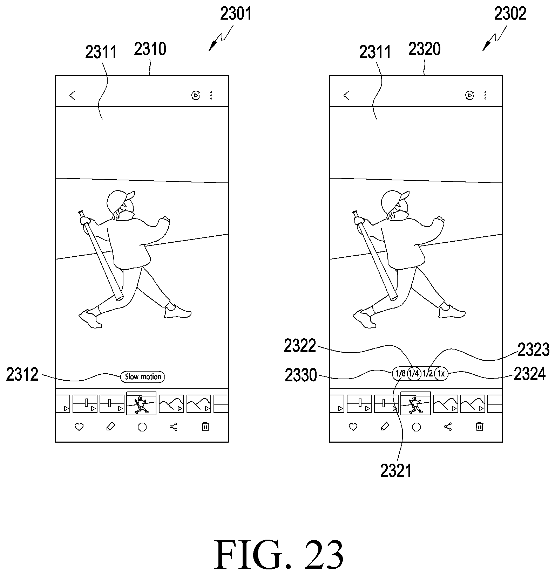

FIG. 23 is a view illustrating a method of providing a video according to an embodiment.

Referring to FIG. 23, in an embodiment, at reference numeral 2301, the processor 230 may play back a video stored in the memory 220 in a normal mode through the touch display 210 of the electronic device 201 (e.g., a smartphone).

In an embodiment, the processor 230 may display a screen 2310 including a video 2311 being played back and an object 2312 for performing a function of playing back the video 2311 in a slow motion mode through the touch display 210.

In an embodiment, at reference numerals 2301 and 2302, the processor 230 may display a screen 2320 including the video 2311 and an object 2330 for playing back the video 2311 in a slow motion mode through the touch display 210, based on a user input for the object 2312.

In an embodiment, the object 2330 may include a first object 2321, a second object 2322, a third object 2323, and a fourth object 2324.

In an embodiment, the first object 2321 may be an object for performing a temporal zoom in a state in which a number of one or more interpolation frames interpolated between frames of the video 2311 is set to 7. For example, the processor 230 may perform a temporal zoom of generating interpolation frames of the video 2311 (e.g., by repeating an operation of generating seven interpolation frames between a frame and an immediately next frame within the video 2311, while a long press input is maintained), and playing back frames of the video 2311 and the generated interpolation frames, based on a user input (e.g., a long press input) for the first object 2321. In this case, a speed where the video 2311 is played back in the slow motion mode may be about 1/8 of a speed where the video 2311 is played back in the normal mode.

In an embodiment, the second object 2322 may be an object for performing a temporal zoom in a state in which a number of one or more interpolation frames interpolated between frames of the video 2311 is set to 3.

In an embodiment, the third object 2323 may be an object for performing a temporal zoom in a state in which a number of one or more interpolation frames interpolated between frames of the video 2311 is set to 1.

In an embodiment, the fourth object 2324 may be an object indicating that a current playback speed of the video 2411 is 1x (1.0x).

In an embodiment, the processor 230 may play back the video 2311 in a slow motion mode at a playback speed corresponding to the selected object, by selecting one of the first object 2321 to the third object 2323.

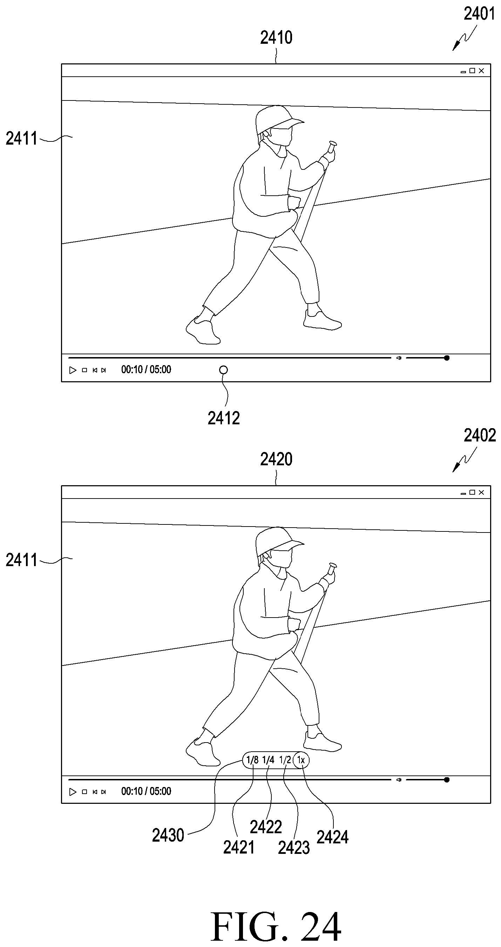

FIG. 24 is a view illustrating a method of providing a video according to an embodiment.

In an embodiment, FIG. 24 may be a diagram illustrating operations performed by the electronic device 201 to provide a video, when the electronic device 201 is a PC.

Referring to FIG. 24, in an embodiment, at reference numeral 2401, the processor 230 may play back a video stored in the memory 220 in a normal mode through a display (e.g., the display module 160) of the electronic device 201.

In an embodiment, the processor 230 may obtain an input for playing back the video 2411 using an input module (e.g., a keyboard, a mouse included in the input module 150). The processor 230 may display a screen 2410 (e.g., an execution screen of a video player) including a video 2411 being played back and an object 2412 for performing a function of playing back the video 2411 in a slow motion mode through a display, based on the input.

In an embodiment, at reference numerals 2401 and 2402, the processor 230 may display a screen 2420 including the video 2411 and an object 2430 for playing back the video 2411 in a slow motion mode through a display, based on a user input for the object 2412.

In an embodiment, the object 2430 may include a first object 2421, a second object 2422, a third object 2423, and a fourth object 2424.

In an embodiment, the first object 2421 may be an object for performing a temporal zoom in a state in which a number of one or more interpolation frames interpolated between frames of the video 2411 is set to 7. For example, the processor 230 may perform a temporal zoom of generating interpolation frames of the video 2411 and playing back frames of the video 2411 and the generated interpolation frames, based on an input (e.g., an input of maintaining a press on a button of a mouse) for the first object 2421. In this case, a speed where the video 2411 is played back in the slow motion mode may be about 1/8 of a speed where the video 2411 is played back in the normal mode.

In an embodiment, the second object 2422 may be an object for performing a temporal zoom in a state in which a number of one or more interpolation frames interpolated between frames of the video 2411 is set to 3.

In an embodiment, the third object 2423 may be an object for performing a temporal zoom in a state in which a number of one or more interpolation frames interpolated between frames of the video 2411 is set to 1.

In an embodiment, the fourth object 2424 may be an object indicating that a current playback speed of the video 2411 is 1x (1.0x).

In an embodiment, the processor 230 may play back the video 2411 in a slow motion mode at a playback speed corresponding to the selected object, by selecting one of the first object 2421 to the third object 2423.

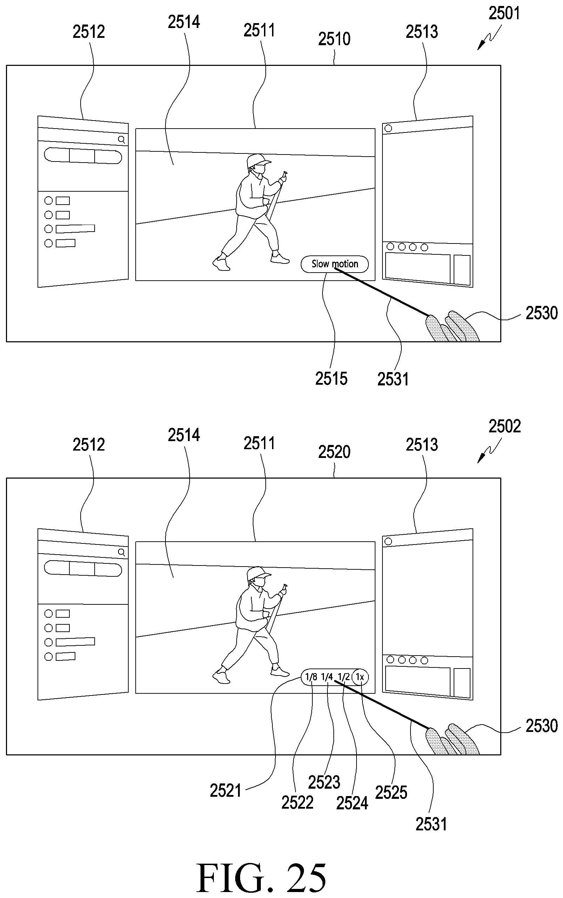

FIG. 25 is a view illustrating a method of providing a video according to an embodiment.

In an embodiment, FIG. 25 may be a diagram illustrating operations performed by the electronic device 201 to provide a video, when the electronic device 201 is a head-mounted display (HMD) device (e.g., an augmented reality (AR) glass, a virtual reality (VR) glass).

Referring to FIG. 25, in an embodiment, at reference numeral 2501, the processor 230 may play back a video stored in the memory 220 in a normal mode in a virtual space (or a real space) through a display of the electronic device 201. For example, the processor 230 may display a screen 2510 in which a video 2514 is played back in a normal mode on a window 2511 among windows 2511, 2512, 2513 disposed in a virtual space (or a real space) through a display of the electronic device 201.

In an embodiment, the processor 230 may obtain a user input (e.g., an input using a hand gesture, an input using a gaze of a user, an input using a controller capable of controlling the electronic device 201) for an object 2515 displayed in a region in which a video 2514 being played back is displayed and for performing a function of playing back the video 2514 in a slow motion mode. For example, the processor 230 may display a virtual image 2530 representing a hand of a user in the virtual space, by tracking a hand gesture of the user. The processor 230 may select an object 2515 indicated by a virtual ray 2531 displayed from the virtual image 2530.

In an embodiment, at reference numerals 2501 and 2502, the processor 230 may display a screen 2520 including a window 2511 including the video 2514 and an object 2521 for playing back the video 2514 in a slow motion mode through a display, based on a user input for the object 2515.

In an embodiment, the object 2521 may include a first object 2522, a second object 2523, a third object 2524, and a fourth object 2525.

In an embodiment, the first object 2522 may be an object for performing a temporal zoom in a state in which a number of one or more interpolation frames interpolated between frames of the video 2514 is set to 7. For example, the processor 230 may perform a temporal zoom of generating interpolation frames of the video 2514 and playing back frames of the video 2514 and the generated interpolation frames, based on an input for the first object 2522. In this case, a speed where the video 2514 is played back in the slow motion mode may be about 1/8 of a speed where the video 2514 is played back in the normal mode.

In an embodiment, the second object 2523 may be an object for performing a temporal zoom in a state in which a number of one or more interpolation frames interpolated between frames of the video 2514 is set to 3.

In an embodiment, the third object 2524 may be an object for performing a temporal zoom in a state in which a number of one or more interpolation frames interpolated between frames of the video 2514 is set to 1.

In an embodiment, the fourth object 2525 may be an object indicating that a current playback speed of the video 2514 is 1x (1.0x).

In an embodiment, the processor 230 may play back the video 2514 in a slow motion mode at a playback speed corresponding to the selected object, by selecting one of the first object 2522 to the third object 2524.

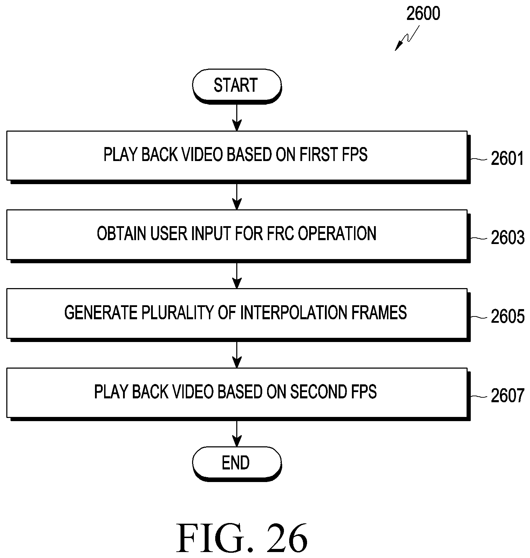

FIG. 26 is a flowchart 2600 illustrating a method of providing a video according to an embodiment.

Referring to FIG. 26, in an embodiment, examples of playing back a video in a slow motion mode by performing an FRC operation for a video have been described with reference to FIGS. 2 to 25, but this is not limiting. In FIG. 26, an embodiment in which a playback speed of a video is maintained even after an FRC operation is performed for a video is described.

In operation 2601, in an embodiment, the processor 230 may play back (e.g., display) a video stored in the memory 220 based on a first FPS through the touch display 210, based on a user input for playing back the video. For example, the processor 230 may play back an original video generated at the first FPS through the touch display 210 at the first FPS.

In operation 2603, in an embodiment, the processor 230 may obtain a user input for an FRC operation for a video. For example, the processor 230 may obtain a long press input for a video being played back.

In operation 2605, in an embodiment, the processor 230 may generate a plurality of interpolation frames by performing an FRC operation for a video while the user input for an FRC operation is maintained.

In operation 2607, in an embodiment, the processor 230 may play back a video (e.g., frames of an original video and the generated plurality of interpolation frames) based on a second FPS, while the user input for an FRC operation is maintained.

In an embodiment, a speed of playing back frames of an original video and the generated plurality of interpolation frames based on the second FPS in operation 2607 may be the same as a speed of playing back an original video based on the first FPS in operation 2601. For example, when a number of interpolation frames to be interpolated for each of frames of an original video is 3, a number of frames of the original video and the generated plurality of interpolation frames may be about 4 times that of frames of the original video. In this case, the processor 230 may play back frames of the original video and the generated plurality of interpolation frames at a second FPS about 4 times higher than the first FPS, such that a speed of playing back frames of the original video and the generated plurality of interpolation frames based on the second FPS in operation 2607 is the same as a speed of playing back an original video based on the first FPS in operation 2601.

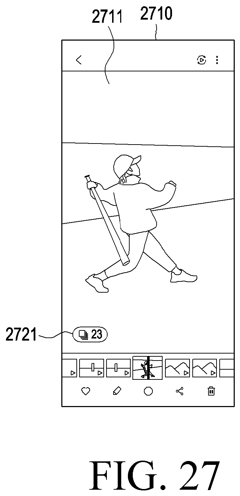

FIG. 27 is a view illustrating a method of providing a video according to an embodiment.

Referring to FIG. 27, in an embodiment, the processor 230 may generate a video by performing an FRC operation for a plurality of frames (e.g., a plurality of images) continuously captured within a designated time.

In an embodiment, the processor 230 may display a screen 2710 including one frame 2711 among the plurality of frames obtained in a continuous shooting mode (or a burst shot mode) through the touch display 210. An image 2721 on the screen 2710 may include information indicating that a number of the plurality of frames captured in the continuous shooting mode is 23.

In an embodiment, the processor 230 may generate a plurality of interpolation frames by performing an FRC operation for the plurality of frames obtained in the continuous shooting mode, based on a user input. The processor 230 may generate a graphics interchange format (GIF) file or a video (e.g., a video playable in a slow motion mode) by combining the plurality of frames obtained in the continuous shooting mode and the generated plurality of interpolation frames.

An electronic device 201 according to an embodiment may include a touch display 230, at least one processor 230 including processing circuitry, and memory 220 storing instructions. The instructions may, when executed by the at least one processor 230 individually or collectively, cause the electronic device 201 to play back the video in a normal mode on a user interface through the touch display 230, based on a first user input for playing back a video stored in the memory 220. The instructions may, when executed by the at least one processor 230 individually or collectively, cause the electronic device 201 to obtain a second user input for playing back in a slow motion mode, while playing back the video in the normal mode through the touch display 230. The second user input may correspond to a touch input on the touch display 230. The instructions may, when executed by the at least one processor 230 individually or collectively, cause the electronic device 201 to generate interpolation frames by performing the frame rate conversion operation for corresponding frames included in the video, while the second user input is maintained on the touch display 230. The instructions may, when executed by the at least one processor 230 individually or collectively, cause the electronic device 201 to play back the video in the slow motion mode by displaying the corresponding frames together with the generated interpolation frames through the touch display 230, while the second user input is maintained on the touch display 230. The instructions may, when executed by the at least one processor 230 individually or collectively, cause the electronic device 201 to resume playing back the video in the normal mode through the touch display 230, based on the second user input being released from the touch display 230.

In an embodiment, the second user input may include a long press input on the touch display 210. The corresponding frames may be frames displayed on the touch display 210 during a time interval from a time when a long press input is obtained to a time when the long press input is released, within the video. The instructions may, when executed by the processor 230 individually or collectively, cause the electronic device 201 to play back, in the normal mode, frames next to a last frame among the frames displayed on the touch display 210 during the time interval, the frames next to the last frame being included in the video, based on the long press input being released.

In an embodiment, the instructions may, when executed by the processor 230 individually or collectively, cause the electronic device 201 to generate one or more interpolation frames interpolated between a first frame and a second frame by performing the FRC operation based on the first frame being played back through the touch display 210 when the second user input is obtained and the second frame next to the first frame. The first frame and the second frame may be included in the corresponding frames, and the one or more interpolation frames may be included in the interpolation frames. The instructions may, when executed by the processor 230 individually or collectively, cause the electronic device 201 to play back the one or more interpolation frames and the second frame sequentially through the touch display 210 after the first frame is played back.

In an embodiment, the instructions may, when executed by the processor 230 individually or collectively, cause the electronic device 201 to obtain an intensity of a pressure which occurs by the touch input. The instructions may, when executed by the processor 230 individually or collectively, cause the electronic device 201 to determine, for each of the corresponding frames, a number of one or more interpolation frames to be interpolated between a frame and a frame next to the frame. The number of the one or more interpolation frames may correspond to the intensity of the pressure which occurs by the touch input. The instructions may, when executed by the processor 230 individually or collectively, cause the electronic device 201 to generate, by performing the FRC operation, the one or more interpolation frames of the determined number for each of the corresponding frames.

In an embodiment, the instructions may, when executed by the processor 230 individually or collectively, cause the electronic device 201 to identify a position where the second user input is obtained within the touch display 210. The instructions may, when executed by the processor 230 individually or collectively, cause the electronic device 201 to, based on the position being a first position, generate interpolation frames by performing the FRC operation for a third frame being played back through the touch display 210 when the second user input is obtained and frames previous to the third frame. The instructions may, when executed by the processor 230 individually or collectively, cause the electronic device 201 to, based on the position being a second position different from the first position, generate interpolation frames by performing the FRC operation for the third frame and frames subsequent to the third frame.

In an embodiment, the second user input may include an input made by a drag on the touch display 210. The instructions may, when executed by the processor 230 individually or collectively, cause the electronic device 201 to obtain a direction of the drag and a length of the drag. The instructions may, when executed by the processor 230 individually or collectively, cause the electronic device 201 to, based on the direction of the drag being a first direction, generate interpolation frames by performing the FRC operation for a fourth frame being played back through the touch display 210 when the second user input is obtained and frames subsequent to the fourth frame. For each of the fourth frame and the frames subsequent to the fourth frame, a number of one or more interpolation frames to be interpolated between a frame and a frame next to the frame may correspond to the length of the drag. The instructions may, when executed by the processor 230 individually or collectively, cause the electronic device 201 to, based on the direction of the drag being a second direction different from the first direction, generate interpolation frames by performing the FRC operation for the fourth frame and frames previous to the fourth frame. For each of the fourth frame and the frames previous to the fourth frame, a number of one or more interpolation frames to be interpolated between a frame and a frame next to the frame may correspond to the length of the drag.

In an embodiment, the instructions may, when executed by the processor 230 individually or collectively, cause the electronic device 201 to, based on generating the interpolation frames, store a first time and a second time of the video in the memory 220, the first time corresponding to an initial frame of the corresponding frames, the second time corresponding to a last frame of the corresponding frames. The instructions may, when executed by the processor 230 individually or collectively, cause the electronic device 201 to, based on a third user input for storing a video in which the corresponding frames and the interpolation frames are combined, identify the first time and the second time. The instructions may, when executed by the processor 230 individually or collectively, cause the electronic device 201 to generate the interpolation frames by performing the FRC operation from the initial frame corresponding to the first time to the last frame corresponding to the second time. The instructions may, when executed by the processor 230 individually or collectively, cause the electronic device 201 to store the video in which the generated plurality of interpolation frames and the corresponding frames are combined.

In an embodiment, the instructions may, when executed by the processor 230 individually or collectively, cause the electronic device 201 to, based on obtaining the interpolation frames, store a fifth time and a sixth time of the video in the memory 220, the fifth time corresponding to an initial frame of the corresponding frames, the sixth time corresponding to a last frame of the corresponding frames. The instructions may, when executed by the processor 230 individually or collectively, cause the electronic device 201 to, based on a fifth user input for storing a video in which frames of the video stored in the memory 220 and the interpolation frames are combined, identify the fifth time and the sixth time. The instructions may, when executed by the processor 230 individually or collectively, cause the electronic device 201 to generate the interpolation frames by performing the FRC operation from the initial frame corresponding to the fifth time to the last frame corresponding to the sixth time. The instructions may, when executed by the processor 230 individually or collectively, cause the electronic device 201 to store the video in which the generated interpolation frames and the frames are combined.

In an embodiment, the instructions may, when executed by the processor 230 individually or collectively, cause the electronic device 201 to, based on the first user input, play back the video in a first region and display thumbnail images in a second region, through the touch display 210, the thumbnail images corresponding to a portion of frames determined based on a time when the video is being played back among frames of the video. The instructions may, when executed by the processor 230 individually or collectively, cause the electronic device 201 to, based on the second user input for the second region, generate the interpolation frames by performing the FRC operation for the corresponding frames. The instructions may, when executed by the processor 230 individually or collectively, cause the electronic device 201 to play back the corresponding frames and the interpolation frames in the first region and display thumbnail images of at least a portion of the corresponding frames and thumbnail images of at least a portion of the interpolation frames in the second region, through the touch display 210.

In an embodiment, the second user input may include an input for enlarging or reducing a video being played back through the touch display 210. The instructions may, when executed by the processor 230 individually or collectively, cause the electronic device 201 to generate the enlarged or reduced interpolation frames by performing the FRC operation for the corresponding frames enlarged or decreased based on the second user input. The instructions may, when executed by the processor 230 individually or collectively, cause the electronic device 201 to, while the second user input is obtained, display the enlarged or decreased corresponding frames and the enlarged or decreased interpolation frames through the touch display 210.

A method according to an embodiment may include playing back a video in a normal mode through a touch display 210 of an electronic device 201, based on a first user input for playing back the video stored in memory 220 of the electronic device 201. The method may include obtaining a second user input for playing back in a slow motion mode, while playing back the video in the normal mode on a user interface through the touch display 210 of the electronic device 201. The second user input may correspond to a touch input on the touch display 210. The method may include generating interpolation frames by performing a frame rate conversion operation for corresponding frames included in the video, while the second user input is maintained on the touch display 210. The method may include playing back the video in the slow motion mode by displaying the corresponding frames together with the generated interpolation frames through the touch display 210, while the second user input is maintained on the touch display 210. The method may include resuming the playback of the video in the normal mode through the touch display 210, based on the second user input being released from the touch display 210.

In an embodiment, the second user input may include a long press input on the touch display 210. The corresponding frames may be frames displayed on the touch display 210 during a time interval from a time when a long press input is obtained to a time when the long press input is released, within the video. Resuming the playback of the video in the normal mode may include, based on the long press input being released, playing back, in the normal mode, frames next to a last frame among the frames displayed on the touch display 210 during the time interval, the frames next to the last frame being included in the video.

In an embodiment, generating the interpolation frames may include generating one or more interpolation frames interpolated between a first frame and a second frame by performing the FRC operation based on the first frame being played back through the touch display 210 when the second user input is obtained and the second frame next to the first frame. The first frame and the second frame may be included in the corresponding frames, and the one or more interpolation frames may be included in the interpolation frames. Playing back the video in the slow motion mode may include playing back the one or more interpolation frames and the second frame sequentially through the touch display 210 after the first frame is played back.

In an embodiment, generating the interpolation frames may include obtaining an intensity of a pressure which occurs by the touch input. Generating the interpolation frames may include determining, for each of the corresponding frames, a number of one or more interpolation frames to be interpolated between a frame and a frame next to the frame. The number of the one or more interpolation frames may correspond to the intensity of the pressure which occurs by the touch input. Generating the interpolation frames may include generating, by performing the FRC operation, the one or more interpolation frames of the determined number for each of the corresponding frames.

In an embodiment, generating the interpolation frames may include identifying a position where the second user input is obtained within the touch display 210. Generating the interpolation frames may include, based on the position being a first position, generating interpolation frames by performing the FRC operation for a third frame being played back through the touch display 210 when the second user input is obtained and frames previous to the third frame. Generating the interpolation frames may include, based on the position being a second position different from the first position, generating interpolation frames by performing the FRC operation for the third frame and frames subsequent to the third frame.

In an embodiment, the second user input may include an input made by a drag on the touch display 210. Generating the interpolation frames may include obtaining a direction of the drag and a length of the drag. Generating the interpolation frames may include, based on the direction of the drag being a first direction, generating interpolation frames by performing the FRC operation for a fourth frame being played back through the touch display 210 when the second user input is obtained and frames subsequent to the fourth frame. For each of the fourth frame and the frames subsequent to the fourth frame, a number of one or more interpolation frames to be interpolated between a frame and a frame next to the frame may correspond to the length of the drag. Generating the interpolation frames may include, based on the direction of the drag being a second direction different from the first direction, generating interpolation frames by performing the FRC operation for the fourth frame and frames previous to the fourth frame. For each of the fourth frame and the frames previous to the fourth frame, a number of one or more interpolation frames to be interpolated between a frame and a frame next to the frame may correspond to the length of the drag.

In an embodiment, the method may further include, based on generating the interpolation frames, storing a first time and a second time of the video in the memory 220, the first time corresponding to an initial frame of the corresponding frames, the second time corresponding to a last frame of the corresponding frames. The method may further include, based on a third user input for storing a video in which the corresponding frames and the interpolation frames are combined, identifying the first time and the second time. The method may further include generating the interpolation frames by performing the FRC operation from the initial frame corresponding to the first time to the last frame corresponding to the second time. The method may further include storing the video in which the generated interpolation frames and the corresponding frames are combined.

In an embodiment, the method may further include, based on generating the plurality of interpolation frames, storing a fifth time and a sixth time of the video in the memory 220, the fifth time corresponding to an initial frame of the corresponding frames, the sixth time corresponding to a last frame of the corresponding frames. The method may further include, based on a fifth user input for storing a video in which frames of the video stored in the memory 220 and the interpolation frames are combined, identifying the fifth time and the sixth time. The method may further include generating the interpolation frames by performing the FRC operation from the initial frame corresponding to the fifth time to the last frame corresponding to the sixth time. The method may further include storing the video in which the generated interpolation frames and the frames are combined in the memory 220.

In an embodiment, playing back the video in the normal mode may include, based on the first user input, playing back the video in a first region and displaying thumbnail images in a second region, through the touch display 210, the thumbnail images corresponding to a portion of frames determined based on a time when the video is being played back among frames of the video. Generating the interpolation frames may include, based on the second user input for the second region, generating the interpolation frames by performing the FRC operation for the corresponding frames. Playing back the video in the slow motion mode may include playing back the corresponding frames and the interpolation frames in the first region and displaying thumbnail images of at least a portion of the corresponding frames and thumbnail images of at least a portion of the interpolation frames in the second region, through the touch display 210.

In an embodiment, in a non-transitory computer-readable storage medium storing computer-executable instructions, the computer-executable instructions may, when executed by at least one processor 230 individually or collectively, cause an electronic device 201 to play back a video in a normal mode on a user interface through a touch display 210 of the electronic device 201, based on a first user input for playing back the video stored in memory 220 of the electronic device 201. The computer-executable instructions may, when executed by at least one processor 230 individually or collectively, cause the electronic device 201 to obtain a second user input for playing back in a slow motion mode, while playing back the video in the normal mode through the touch display 210. The second user input may correspond to a touch input on the touch display 210. The computer-executable instructions may, when executed by at least one processor 230 individually or collectively, cause the electronic device 201 to generate interpolation frames by performing a frame conversion operation for corresponding frames included in the video, while the second user input is maintained on the touch display 210. The computer-executable instructions may, when executed by at least one processor 230 individually or collectively, cause the electronic device 201 to play back the video in the slow motion mode by displaying the corresponding frames together with the generated interpolation frames through the touch display 210, while the second user input is maintained on the touch display 210. The computer-executable instructions may, when executed by at least one processor 230 individually or collectively, cause the electronic device 201 to resume playing back the video in the normal mode through the touch display 210, based on the second user input being released from the touch display 210.

Further, the structure of the data used in embodiments of the disclosure may be recorded in a computer-readable recording medium via various means. The computer-readable recording medium includes a storage medium, such as a magnetic storage medium (e.g., a ROM, a floppy disc, or a hard disc) or an optical reading medium (e.g., a CD-ROM or a DVD).

## Claims

1. An electronic device (201) comprising:
a touch display (210);
at least one processor (230) comprising processing circuitry; and
memory (220) storing instructions that, when executed by the at least one processor (230) individually or collectively, cause the electronic device (201) to:
based on a first user input for playing back a video stored in the memory (220), play back the video in a normal mode on a user interface through the touch display (210),
while playing back the video in the normal mode through the touch display (210), obtain a second user input for playing back in a slow motion mode, the second user input corresponding to a touch input on the touch display (210),
while the second user input is maintained on the touch display (210), generate interpolation frames by performing a frame rate conversion (FRC) operation for corresponding frames included in the video, and
while the second user input is maintained on the touch display (210), play back the video in the slow motion mode by displaying, the corresponding frames of the video together with the generated interpolation frames, through the touch display (210), and
based on the second user input being released from the touch display (210), resume playing back the video in the normal mode through the touch display (210).

2. The electronic device (201) of claim 1, wherein the second user input includes a long press input on the touch display (210),
wherein the corresponding frames are frames displayed on the touch display (210) during a time interval from a time when the long press input is obtained to a time when the long press input is released, within the video, and
wherein the instructions, when executed by the at least one processor (230) individually or collectively, cause the electronic device (201) to:
based on the long press input being released, play back, in the normal mode, frames next to a last frame among the frames displayed on the touch display (210) during the time interval, the frames next to the last frame being included in the video.

3. The electronic device (201) of claim 1 or 2, wherein the instructions, when executed by the at least one processor (230) individually or collectively, cause the electronic device (201) to:
generate one or more interpolation frames interpolated between a first frame and a second frame by performing, based on the first frame and the second frame, the FRC operation, the first frame being a frame which is being played back through the touch display (210) when the second user input is obtained, the second frame being a frame next to the first frame, the first frame and the second frame being included in the corresponding frames, the one or more interpolation frames being included in the interpolation frames, and
play back the one or more interpolation frames and the second frame sequentially through the touch display (210) after the first frame is played back.

4. The electronic device (201) of any one of claims 1 to 3, wherein the instructions, when executed by the at least one processor (230) individually or collectively, cause the electronic device (201) to:
obtain an intensity of a pressure which occurs by the touch input,
determine, for each of the corresponding frames, a number of one or more interpolation frames to be interpolated between a frame and a frame next to the frame , wherein the number of the one or more interpolation frames corresponds to the intensity of the pressure which occurs by the touch input, and
generate, by performing the FRC operation, the one or more interpolation frames of the determined number for each of the corresponding frames.

5. The electronic device (201) of any one of claims 1 to 4,
wherein the instructions, when executed by the at least one processor (230) individually or collectively, cause the electronic device (201) to:
identify a position at which the second user input is obtained within the touch display (210),
based on the position being a first position, generate interpolation frames by performing the FRC operation for a third frame and frames previous to the third frame, the third frame being a frame which is being played back through the touch display (210) when the second user input is obtained, and
based on the position being a second position different from the first position, generate interpolation frames by performing the FRC operation for the third frame and frames subsequent to the third frame.

6. The electronic device (201) of any one of claims 1 to 5,
wherein the second user input includes an input made by a drag on the touch display (210),
wherein the instructions, when executed by the at least one processor (230) individually or collectively, cause the electronic device (201) to:
obtain a direction of the drag and a length of the drag,
based on the direction of the drag being a first direction, generate interpolation frames by performing the FRC operation for a fourth frame and frames subsequent to the fourth frame, the fourth frame being a frame which is being played back through the touch display (210) when the second user input is obtained, wherein a number of the interpolation frames to be interpolated between a frame and a frame next to the frame, for each of the fourth frame and the frames subsequent to the fourth frame, corresponds to the length of the drag, and
based on the direction of the drag being a second direction different from the first direction, generate interpolation frames by performing the FRC operation for the fourth frame and frames previous to the fourth frame, wherein a number of the interpolation frames to be interpolated between a frame and a frame next to the frame, for each of the fourth frame and the frames previous to the fourth frame, corresponds to the length of the drag.

7. The electronic device (201) of any one of claims 1 to 6, wherein the instructions, when executed by the at least one processor (230) individually or collectively, cause the electronic device (201) to:
based on generating the interpolation frames, store a first time point and a second time point of the video in the memory (220), the first time point corresponding to an initial frame of the corresponding frames, the second time point corresponding to a last frame of the corresponding frames,
based on a third user input for storing a video in which the corresponding frames and the interpolation frames are combined, identify the first time point and the second time point,
generate the interpolation frames by performing the FRC operation from the initial frame corresponding to the first time point to the last frame corresponding to the second time point, and
store, in the memory (220), the video in which the generated interpolation frames and the corresponding frames are combined.

8. The electronic device (201) of any one of claims 1 to 7, wherein the instructions, when executed by the at least one processor (230) individually or collectively, cause the electronic device (201) to:
based on generating the interpolation frames, store a fifth time point and a sixth time point of the video in the memory (220), the fifth time point corresponding to an initial frame of the corresponding frames, the sixth time point corresponding to a last frame of the corresponding frames,
based on a fifth user input for storing a video in which frames of the video stored in the memory (220) and the interpolation frames are combined, identify the fifth time point and the sixth time point,
generate the interpolation frames by performing the FRC operation from the initial frame corresponding to the fifth time point to the last frame corresponding to the sixth time point, and
store, in the memory (220), the video in which the frames and the generated interpolation frames are combined.

9. The electronic device (201) of any one of claims 1 to 8,
wherein the instructions are configured to, when executed by the at least one processor (230) individually or collectively, cause the electronic device (201) to:
based on the first user input, play back the video in a first region and display thumbnail images in a second region, through the touch display (210), the thumbnail images corresponding to a portion of frames determined based on a time point at which the video is being played back among the frames of the video,
based on the second user input for the second region, generate the interpolation frames by performing the FRC operation for the corresponding frames, and
play back the corresponding frames and the interpolation frames in the first region and display thumbnail images of at least a portion of the corresponding frames and thumbnail images of at least a portion of the interpolation frames in the second region, through the touch display (210).

10. The electronic device (201) of any one of claims 1 to 9,
wherein the second user input includes an input for enlarging or reducing the video which is being played back through the touch display (210),
wherein the instructions, when executed by the at least one processor (230) individually or collectively, cause the electronic device (201) to:
generate enlarged or reduced interpolation frames by performing the FRC operation for the corresponding frames enlarged or reduced based on the second user input, and
while the second user input is maintained, display, through the touch display (210), the enlarged or reduced corresponding frames and the enlarged or reduced interpolation frames.

11. A method comprising:
based on a first user input for playing back a video stored in memory (220) of an electronic device (201), playing back the video in a normal mode on a user interface through a touch display (210) of the electronic device (201);
while playing back the video in the normal mode through the touch display (210) of the electronic device (201), obtaining a second user input for playing back in a slow motion mode, the second user input corresponding to a touch input on the touch display (210);
while the second user input is maintained on the touch display (210), generating interpolation frames by performing a frame rate conversion (FRC) operation for corresponding frames included in the video;
while the second user input is maintained on the touch display (210), playing back the video in the slow motion mode by displaying the corresponding frames together with the generated interpolation frames through the touch display (210); and
based on the second user input being released from the touch display (210), resuming the playback of the video in the normal mode through the touch display (210).

12. The method of claim 11, wherein the second user input includes a long press input on the touch display (210),
wherein the corresponding frames are frames displayed on the touch display (210) during a time interval from a time when the long press input is obtained to a time when the long press input is released, within the video, and
wherein resuming the playback of the video in the normal mode comprises:
based on the long press input being released, playing back, in the normal mode, frames next to a last frame among the frames displayed on the touch display (210) during the time interval, the frames next to the last frame being included in the video.

13. The method of claim 11 or 12, wherein generating the interpolation frames comprises:
generating one or more interpolation frames interpolated between a first frame and a second frame by performing the FRC operation based on the first frame being played back through the touch display (210) when the second user input is obtained and the second frame next to the first frame, the first frame and the second frame being included in the corresponding frames, the one or more interpolation frames being included in the interpolation frames, and
wherein playing back the video in the slow motion mode comprises:
playing back the one or more interpolation frames and the second frame sequentially through the touch display (210) after the first frame is played back.

14. The method of any one of claims 11 to 13, wherein generating the interpolation frames comprises:
obtaining an intensity of a pressure which occurs by the touch;
determining, for each of the corresponding frames, a number of one or more interpolation frames to be interpolated between a frame and a frame next to the frame, wherein the number of the one or more interpolation frames corresponds to the intensity of the pressure which occurs by the touch input; and
generating, by performing the FRC operation, the one or more interpolation frames of the determined number for each of the corresponding frames.

15. The method of any one of claims 11 to 14, wherein generating the interpolation frames comprises:
identifying a position where the second user input is obtained within the touch display (210);
based on the position being a first position, generating interpolation frames by performing the FRC operation for a third frame and frames previous to the third frame, the third frame being a frame which is being played back through the touch display (210) when the second user input is obtained; and
based on the position being a second position different from the first position, generating interpolation frames by performing the FRC operation for the third frame and frames subsequent to the third frame.
